(19) Europäisches Patentamt
European Patent Office
Office européen des brevets

(11) **EP 3 008 442 B1**

(12) **EUROPÄISCHE PATENTSCHRIFT**

(45) Veröffentlichungstag und Bekanntmachung des Hinweises auf die Patenterteilung:
**07.04.2021 Patentblatt 2021/14**

(51) Int Cl.:
*G01F 1/84* (2006.01)  *G01M 5/00* (2006.01)

(21) Anmeldenummer: **14726121.8**

(86) Internationale Anmeldenummer:
**PCT/EP2014/060192**

(22) Anmeldetag: **19.05.2014**

(87) Internationale Veröffentlichungsnummer:
**WO 2014/198495 (18.12.2014 Gazette 2014/51)**

(54) **MESSSYSTEM MIT EINEM DRUCKGERÄT SOWIE VERFAHREN ZUR ÜBERWACHUNG UND/ODER ÜBERPRÜFUNG EINES SOLCHEN DRUCKGERÄTS**

MEASURING SYSTEM HAVING A PRESSURE DEVICE AND METHOD FOR MONITORING AND/OR CHECKING SUCH A PRESSURE DEVICE

SYSTÈME DE MESURE POURVU D'UN APPAREIL SOUS PRESSION ET PROCÉDÉ POUR SURVEILLER ET/OU CONTRÔLER UN TEL APPAREIL SOUS PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.06.2013 DE 102013106157**

(43) Veröffentlichungstag der Anmeldung:
**20.04.2016 Patentblatt 2016/16**

(73) Patentinhaber: **Endress+Hauser Flowtec AG**
**4153 Reinach (BL) (CH)**

(72) Erfinder:
• **ZHU, Hao**
  **85354 Freising (DE)**

• **RIEDER, Alfred**
  **84032 Landshut (DE)**
• **BERNHARD, Holger**
  **79639 Grenzach-Wyhlen (DE)**

(74) Vertreter: **Andres, Angelika Maria**
**Endress+Hauser Group Services (Deutschland) AG+Co. KG**
**Colmarer Straße 6**
**79576 Weil am Rhein (DE)**

(56) Entgegenhaltungen:
**JP-A- 2009 041 924    JP-A- 2009 041 924**
**US-A- 4 546 649      US-A- 4 546 649**

EP 3 008 442 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Überwachung und/oder Überprüfung eines ein von einer, beispielsweise metallischen, Wandung umhülltes Lumen aufweisenden Druckgeräts, nämlich eines Geräts zum Führen und/oder Vorhalten eines nominell mit einem statischen Überdruck bzw. einem Druck von mehr als 1 bar auf die Wandung einwirkenden Fluids, beispielsweise eines Gases, einer Flüssigkeit oder einer fließfähigen Dispersion, in nämlichem Lumen. Darüberhinaus betrifft die Erfindung ein, insb. zur Realisierung nämlichen Verfahrens geeignetes, Meßsystem zum Ermitteln von eine, beispielsweise fluiddynamische und/oder thermodynamische, Meßgröße, wie z.B. eine Volumendurchflußrate, eine Massendurchflußrate, einen Dichte, eine Viskosität, einen Druck oder eine Temperatur, eines Fluids repräsentierenden Meßwerten, welches Meßsystem ein solches Druckgerät umfaßt.

Druckgeräte, beispielsweise auch solche, die der *"Richtlinie 97/23/EG des Europäischen Parlaments und des Rates vom 29. Mai 1997 zur Angleichung der Rechtsvorschriften der Mitgliedstaaten über Druckgeräte"* oder damit korrespondieren nationalen - gelegentlich auch als Druckgeräterichtlinien bezeichneten - Rechtsvorschriften, wie etwa der *"Vierzehnten Verordnung zum Produktsicherheitsgesetz"* (14. ProdSV) oder dem *"ASUE Boiler and Pressure Vessel Code"* (ASUE U-Stamp), unterliegen, finden in industriellen Anwendungen, nicht zuletzt auch in der industriellen Meß- und Automatisierungstechnik, vielfältige Verwendung, beispielsweise inform von Tanks für Flüssiggas, Dampfkesseln oder anderen Behältern zum Aufnehmen bzw. Vorhalten von gegenüber der umgebenden Atmosphäre unter erhöhtem Druck stehenden Fluiden, inform von für den Transport solcher unter erhöhtem Druck stehenden Fluide geeigneten Rohrleitungen oder auch inform von mittels solcher Behälter und/oder Rohrleitungen gebildeten, mithin regelmäßig mit einem erhöhten Betriebsdruck betriebenen Anlagen. Als weitere Vertreter von solchen Druckgeräten sind zudem auch mit vorgenannten Rohrleitungen bzw. Behältern kommunizierende, mithin von darin geführtem Fluid kontaktierte bzw. auch von nämlichem Fluid durchströmte Meßwandler zum Generieren eines mit einer vom Fluid zu erfassenden Meßgröße korrespondierenden Meßsignal bzw. mittels solcher Meßwandler und daran elektrisch gekoppelter Umformer-Elektronik gebildete Meßsysteme, wie z.B. Coriolis-Massendurchfluß-Meßgerät, Wirbeldurchfluß-Meßgeräte oder auch Ultraschall-Durchfluß-Meßgeräte oder damit gebildete Meßapparaturen, zu nennen, nicht zuletzt auch solche, bei denen das Lumen des Druckgeräts mittels einer wenigstens ein betriebsgemäß Fluid führenden Meßrohrs aufweisenden Rohranordnung gebildet ist. Beispiele für solche, regelmäßig auch als ein einer oder mehreren der vorgenannten Rechtsvorschriften unterliegende und/oder als Meßsysteme für zumindest gelegentlich unter hohem Druck von über 50 bar stehende Fluide ausgebildete, Druckgeräte, sind u.a. in der EP-A 816 807, der EP-A 919 793, der EP-A 1 001 254, der US-A 2001/0029790, der US-A 2004/0261541, der US-A 2005/0039547, der US-A 2006/0266129, der US-A 2007/0095153, der US-A 2007/0234824, der US-A 2008/0141789, der US-A 2011/0113896, der US-A 2011/0161018, der US-A 2011/0219872, der US-A 2012/0123705, der US-A 46 80 974, der WO-A 2005/050145, der WO-A 2009/134268, der WO-A 90/15310, der WO-A 95/16897, der WO-A 96/05484, der WO-A 97/40348, der WO-A 98/07009 oder der WO-A 99/39164 beschrieben.

Die darin gezeigten Meßsysteme sind jeweils mittels eines in den Verlauf einer Rohrleitung einsetzbaren, im Betrieb von Fluid durchströmten Meßwandlers vom Vibrationstyp gebildet, wobei der jeweilige Meßwandler jeweils eine mittels wenigstens eines, im wesentlichen gerades oder zumindest abschnittsweise gekrümmten, z.B. U-, oder V-förmigen, Meßrohr gebildete Rohranordnung umfaßt, derart, daß Wandung und Lumen auch jeweils mittels des wenigstens einen Meßrohrs gebildet sind und nämliches Lumen im Betreib mit einem Lumen der angeschlossenen Rohrleitung kommuniziert.

Im Betrieb des Druckgeräts bzw. des damit gebildeten Meßsystems wird das wenigstens eine Meßrohr zwecks Generierung von durch das hindurchströmende Fluid, beispielsweise von dessen Massendurchflußrate, dessen Dichte und/oder dessen Viskosität, mit beeinflußten, jeweils auch als Meßsignal des Meßwandlers dienenden Schwingungssignalen aktiv zu mechanischen Schwingungen angeregt. Weitere Beispiele für solche mittels eines Druckgeräts gebildete Meßsysteme sind u.a. auch in der US-A 57 96 011, der US-B 72 84 449, der US-B 70 17 424, der US-B 69 10 366, der US-B 68 40 109, der US-A 55 76 500, der US-B 66 51 513, der US-A 2005/0072238, der US-A 2006/0225493, der US-A 2008/0072688, der US-A 2011/0265580, der WO-A 2006/009548, WO-A 2008/042290, der WO-A 2007/040468 oder der WO-A 2013/060659 beschrieben.

Jeder der Meßwandler weist zudem ein die Rohranordnung umgebendes, nämlich eine die Rohranordnung aufnehmende Kavität bildendes Meßwandler-Gehäuse sowie, angeformt an das Meßwandler-Gehäuse bzw. darin integriert, einen einlaßseitigen sowie einen auslaßseitigen Anschlußflansch zum Verbinden der Rohranordnung mit der Rohrleitung auf. Für den Fall, daß die Rohranordnung, mithin das Lumen mittels zwei oder mehr Meßrohren gebildet ist, sind die Meßrohre zumeist unter Bildung strömungstechnisch zueinander parallel geschalteter Strömungspfaden über ein sich zwischen den Meßrohren und dem einlaßseitigen Anschlußflansch erstreckenden einlaßseitig Strömungsteiler sowie über ein sich zwischen den Meßrohren und dem auslaßseitigen Anschlußflansch erstreckenden auslaßseitig Strömungsteiler in die Rohrleitung eingebunden. Das Meßwandler-Gehäuse dient neben der Halterung der innerhalb der durch das Meßwandler-Gehäuse gebildeten Kavität plazierten Rohranordnung im besonderen auch dazu, diese sowie andere innen liegenden Bauteile, beispielsweise eine Sensoranordnung des Meßwandlers, vor äußeren Umwelteinflüssen, wie z.B. Staub oder Spritzwasser, zu schützen, mithin eine möglichst hermetisch dichte Kavität bereitzustellen. Nicht zuletzt bei Druckgeräten der in Rede stehenden Art wird seitens der Anwender an derartige Meßwandler-Gehäuse darüberhinaus gelegentlich auch die Anforderung gestellt, daß sie im Falle einer undichten oder berstenden Rohranordnung dem dann zumeist deutlich über dem atmosphärischen Außendruck liegenden statischen Innendruck innerhalb der Kavität zumindest für eine vorgegebene Dauer leckfrei standhalten, mithin eine gewisse Druckfestigkeit aufweisen, vgl. hierzu auch die eingangs erwähnten US-A 2006/0266129, US-A 2005/0039547, US-A 2001/0029790, WO-A 90/15310, EP-A 1 001 254 bzw. die internationale Patentanmeldung PCT/EP2012/070924. Nicht zuletzt für Anwendungen mit toxischen oder leicht entzündbaren Fluiden muß das Meßwandler-Gehäuse dabei gelegentlich sogar auch die an Sicherheitsbehälter gestellten Anforderungen erfüllen können.

Meßsystem der in Rede stehenden Art, mithin damit gebildet Druckgeräte sind zudem üblicherweise mittels eines innerhalb des übergeordneten Datenverarbeitungssystems vorgesehenen - leitungsgebundenen und/oder funkbasierten - Datenübertragungsnetzwerks miteinander und/oder mit entsprechenden elektronischen Prozeß-Steuerungen verbunden, beispielsweise vor Ort installierte Speicherprogrammierbare Steuerungen (SPS) oder in einer entfernten Leitwarte stationiere Prozeß-Leitrechner, wohin die mittels des Meßsystems erzeugten und in geeigneter Weise digitalisierten und entsprechend codierten Meßwerte weitergesendet werden. Mittels Prozeß-Leitrechner können, unter Verwendung entsprechend installierter Softwarekomponenten, die übertragenen Meßwerte weiterverarbeitet und als entsprechende Meßergebnisse z.B. auf Monitoren visualisiert und/oder in Steuersignale für andere als Stellgeräte ausgebildete Feldgeräte, wie z.B. Magnet-Ventile, Elektro-Motoren etc., umgewandelt werden. Dementsprechend dient das Datenverarbeitungssystem üblicherweise auch dazu, das von der Umformer-Elektronik gelieferte Meßwertesignal entsprechend den Anforderungen nachgelagerter Datenübertragungsnetzwerke zu konditionieren, beispielsweise geeignet zu digitalisieren und gegebenenfalls in ein entsprechendes Telegramm umzusetzen, und/oder vor Ort auszuwerten. Dafür sind in solchen Datenverarbeitungssystemen mit den jeweiligen Verbindungsleitungen elektrisch gekoppelte Auswerteschaltungen vorgesehen, die die von der jeweiligen Umformer-Elektronik empfangenen Meßwerte vorund/oder weiterverarbeiten sowie, falls erforderliche, geeignet konvertieren. Zur Datenübertragung dienen in solchen industriellen Datenverarbeitungssystemen zumindest abschnittsweise, insb. serielle, Feldbusse, wie z.B. FOUNDATION FIELDBUS, CAN, CAN-OPEN RACKBUS-RS 485, PROFIBUS etc., oder beispielsweise auch Netzwerke auf Basis des ETHERNET-Standards sowie die entsprechenden, zumeist anwendungsübergreifend standardisierten Übertragungs-Protokolle.

Druckgeräte der in Rede stehenden Art können während des Betriebes gelegentlich erhöhten, ggf. auch über vorab vereinbarte Grenzwerte hinausgehende, mithin für die Integrität des Druckgeräts schädlichen Belastungen ausgesetzt sein, sei es durch unerwünschte Überbelastungen hinsichtlich des Betriebsdrucks, durch Auftreten von unerwünschten Inhomogenitäten in einem, ggf. auch hohe Strömungsgeschwindigkeiten von mehr als 10 ms$^{-1}$ aufweisenden Fluid, beispielsweise inform von im strömenden Fluid mitgeführten Feststoffpartikeln und/oder von in flüssiges Trägermedium eingeschlossenen Gasblasen, und/oder durch unerwünschte thermische Überlastung, beispielsweise infolge von zu hohen Temperaturen des jeweiligen Fluids und/oder ungünstigen zeitlichen Temperaturverläufen, einhergehend mit für die Integrität des Druckgerät ungünstigen räumlichen Temperaturverteilungen. Infolge solcher Belastungen bzw. Überbelastungen kann die Wandung des Druckgeräts partiell so beschädigt werden - etwa infolge einer plastischen Verformung der Wandung und/oder infolge eines Verschleißes der Wandung, nämlich eines Materialabtrags aus deren dem Lumen zugewandten Oberfläche -, daß das Druckgerät nur noch eine im Vergleich zu einer ursprünglichen bzw. nominellen Druckfestigkeit verminderte Druckfestigkeit aufweist; dies beispielsweise auch derart, daß eine Schädigung der Wandung innerhalb sehr kurzer Zeit über eine vorab für das jeweilige Druckgerät festgelegte kritische Schädigung hinausgeht. Nämliche kritische Schädigung der Wandung kann zum Beispiel einer für den jeweiligen Typ bzw. die jeweilige Baureihe des Druckgerät spezifisch ermittelten Schädigung entsprechen, die eine, ggf. auch sofortige, Inspektion des jeweiligen Druckgerät erfordert, und/oder die mit einer einen alsbaldigen bzw. außerplanmäßigen Austausch des Druckgeräts erfordernden verminderten Restlebensdauer nämlichen Druckgeräts korrespondiert.

Für den erwähnten Fall, daß das Druckgerät ein Meßwandler bzw. Bestandteil eines Meßsystem ist, kann die für das jeweilige Druckgerät festgelegte kritische Schädigung auch mit einer aus solcher Schädigung resultierenden verminderten Meßgenauigkeit des Meßsystems bzw. einem, ggf. nicht mehr tolerierbaren, erhöhten systematischen Meßfehler bei der Generierung des Meßsignals entsprechen, beispielsweise infolge einer Schädigung des jeweiligen wenigstens eine Meßrohrs. Von besonderem Interesse sind hierbei auch solche Meßsysteme, bei denen, wie bereits erwähnt, das Druckgerät mittels eines Meßwandlers vom Vibrationstyp gebildet ist. Zum einen sind deren jeweilige Meßrohre zwecks Erzielung einer möglichst hohen Empfindlichkeit von deren Schwingungssignalen, nicht zuletzt auch gegenüber der vom jeweiligen Fluid zu messenden Massendurchflußrate bzw. Dichte, zumeist möglichst dünnwandig ausgebildet, mithin weist die jeweilige Rohranordnung eines solchen Meßwandler üblicherweise Wandungen mit einer vergleichsweise geringen, nämlich nur geringe bzw. minimal zulässige Sicherheitsreserven hinsichtlich der Druckfestigkeit beibringende Wandstärken auf. Zum anderen können aber auch bereits geringfügige, nämlich die Druckfestigkeit der Rohranordnung bzw. des damit gebildeten Druckgeräts noch nicht auf ein unzulässig niedriges Maß herabsenkende Schädigungen der Wandung von Interesse sein, nachdem, wie u.a. auch in den eingangs erwähnten EP-A 816 807, WO-A 2005/050145, WO-A 99/39164, WO-A 96/05484, US-A 2007/0095153 bzw. US-A 2012/0123705 erörtert, auch solche, zumeist auch räumlich eher ungleichmäßig über die Rohranordnung verteilt auftretenden Schädigungen erhebliche Auswirkungen auf die Meßgenauigkeit des Meßsystems, nicht zuletzt auch jene mit der die Massendurchflußrate bzw. die Dichte gemessen werden, haben kann.

Verfahren bzw. Meßsysteme mit Meßandordnungen, die geeignet sind, unerwünscht bzw. unzulässig hohe Schädigungen der vorgennanten Art an solchen mittels Meßwandlers vom Vibrationstyp gebildeten Druckgeräten möglichst frühzeitig detektieren bzw. prognostizieren zu können, bzw. ein Ausmaß solcher Schädigungen quantitativ abschätzen zu können, sind u.a. in den eingangs erwähnten US-A 2007/0095153, US-A 2006/0266129, EP-A 816 807, US-A 2012/0123705, WO-A 2005/050145, WO-A 96/05484 oder WO-A 99/39164 beschrieben. Grundsätzlich basieren die darin gezeigten Verfahren auf der Auswertung von mittels des Meßwandlers im Betrieb gelieferten Schwingungssignalen, ggf. auch unter zusätzlicher Berücksichtigung von die jeweiligen Schwingungen des wenigstens einen Meßrohrs bewirkenden Anregungssignalen. Wenngleich nämliche Verfahren bzw. Meßanordnungen bei mittels Meßwandler vom Vibrationstyp gebildeten Meßsystemen bzw. Druckgeräten sehr vorteilhaft verwendet werden können bzw. auch in zunehmendem Maß zur Anwendung gelangen, ist ein Nachteil derartiger Verfahren bzw. Meßanordnungen dementsprechend darin zu sehen, daß sie auf für solche Meßsysteme spezifischen Meßsignalen - hier den Schwingungssignalen - basieren und somit ausschließlich für ebensolche Meßsysteme, mithin tatsächlich nur für einen relativ kleinen Anteil aus der Gesamtheit der Druckgeräte anwendbar sind. Zudem können die genannten Verfahren bzw. Meßanordnung gelegentlich auch gewisse Querempfindlichkeiten auf andere als die eigentliche Schädigung repräsentierende Meßgrößen, nicht zuletzt auf die oben bezeichneten Meßgrößen Massendurchflußrate, Dichte und/oder Viskosität aufweisen, die entsprechend kompensiert werden müssen, sei es unter Verwendung von im Meßsystems zusätzlich vorgesehener Sensorik und/oder von extern des Meßsystems zusätzlich ermittelter Meßwerte, um verläßlich auf eine zu alarmierenden Schädigung der Wandung schließen bzw. Fehlalarme sicher vermeiden zu können.

Dem Rechnung tragend besteht eine Aufgabe der Erfindung darin, ein Verfahren bzw. ein entsprechendes Meßsystem anzugeben, mittels dem auch ohne Verwendung von Vibrationen der jeweiligen Wandung repräsentierenden Schwingungssignalen die Wandung eines Druckgeräts der in Rede stehenden Art, mithin auch eines Druckgeräts ohne Meßwandler vom Vibrationstyp, auf allfällige Schädigungen - bzw. umgekehrt auf ihre strukturelle Integrität - hin untersucht werden kann, und mittels dem bereits auch geringfügige strukturelle Veränderungen der jeweiligen Wandung, z.B. eine Verringerung der Wandstärke infolge Verschleißes oder eine plastische Verformung der Wandung, verläßlich erkannt bzw. sehr frühzeitig vermeldet werden können.

Zur Lösung der Aufgabe besteht die Erfindung in einem ein Druckgerät umfassenden Meßsystem gemäß dem Patentanspruch 1.

Darüberhinaus besteht die Erfindung in einem dem Überprüfen eines solchen Meßsystems dienlichen Verfahren gemäß dem Patentanspruch 12.

Ein Grundgedanke der Erfindung besteht darin, Druckgeräte der in Rede stehenden Art dadurch auf ihre jeweilige strukturelle Intergrität hin zu überprüfen bzw. zu überwachen, daß von zumindest zwei voneinander räumlich entfernten Wandsegmenten der jeweiligen das Fluid führende Lumen umhüllenden Wandung wiederkehrend jeweils eine Dehnung erfaßt wird. Basierend auf einer kontinuierlichen oder in vorgegebenen Zeitabständen wiederkehrenden - Beobachtung der wenigstens zwei örtlich erfaßten Dehnungen bzw. zeitlicher Verläufe nämlicher Dehnungen, etwa basierend auf mittels am jeweiligen Wandsegment plazierter Dehnungssensoren generierter Dehnungssignale und unter Verwendung einer mit nämlichen Dehnungssensoren elektrisch gekoppelten Umformer-Elektronik, können sehr schnell allfällige Schädigungen der Wandung des Druckgeräts, sei es inform von durch Materialabtrag verursachten Verschleiß oder inform von allfälliger Überbeanspruchung geschuldeter plastischer Verformung, erkannt werden.

Nachdem nämlich sämtliche der Wandsegmente ein und dasselbe Lumen begrenzen, mithin zumindest im Ursprungszustand des Druckgeräts bzw. bei unversehrter Wandung auf ein und dieselbe eingeprägte Druckbelastung, etwa infolge eines gegenüber der umgebenden Atmosphäre erhöhten Innendrucks, bzw. auf ein und dieselbe eingeprägte Druckverteilung im Lumen mit einer lediglich innerhalb eines für das jeweilige Druckgerät spezifischen Toleranzbereich variierenden elastischen Verformung reagiert, kann bei signifikanter, nämlich über einem vorgegebenen Toleranzmaß hinausgehender, mithin außerhalb des Toleranzbereichs liegender Abweichung beider erfaßter Dehnungen voneinander auf eine entsprechende Schädigung der Wandung geschlossen werden. Ein solche Abweichung der Dehnungen kann unter Verwendung der vorgenannten Dehnungssignale zudem auch in einen einem Kennzahlwert für eine die momentane Schädigung der Wandung quantifizierende Schadenskennzahl entsprechenden Schadenswert überführt werden, beispielsweise durch Ermitteln eines oder mehrerer Parameterwerte für einen oder mehrere nämliche Dehnungssignale charakterisierende Signalparameter mittels der vorgenannten Umformer-Elektronik. Als Schadenswert kann z.B. eine absolute oder relative Abweichung zwischen die jeweiligen Signalparameter momentan repräsentierende Parameterwerten oder deren Abweichung von einem dafür vorab, beispielsweise für nämliches Druckgerät mit unversehrter Wandung oder für ein baugleiches anderes Druckgerät, ermittelten Referenzwert dienen.

In Kenntnis des Ausmaßes einer solchen Schädigung kann durch entsprechenden Abgleich mit für das Druckgerät vorab ermittelten Referenzdaten ferner auch festgestellt werden, ob ein Weiterbetrieb des Druckgeräts noch ohne weiteres, nicht zuletzt auch ohne daß eine Beeinträchtigung anderer Anlagenbereichen oder gar eine Gefährdung von Personen oder Umwelt zu besorgen wäre, möglich ist, bzw. kann in Auswertung wiederkehrender Beobachtungen eines zeitlichen Verlaufs der Schädigung auch eine Geschwindigkeit mit der die Schädigung zunimmt ermittelt werden, beispielsweise um basierend darauf eine dem jeweiligen Druckgerät voraussichtlich verbleibende Restlebensdauer abzuschätzen bzw. umgekehrt einen Zeitpunkt des Erreichens einer vorab für das Druckgerät festgelegten kritische Schädigung der Wandung zu prognostizieren, mithin sich anbahnende Gefährdungssituationen infolge einer verminderten Druckfestigkeit frühzeitig entdecken zu können.

Die Erfindung basiert dabei u.a. auf der Erkenntnis, daß die Wandung von Druckgeräten der in Rede stehenden Art im Laufe des Betriebs typischerweise ungleichmäßig geschädigt wird, derart, daß die Wandung zum einen Wandsegmente, die auch über einen langen Beobachtungszeitraum hinweg kaum geschädigt sind, und zum anderen auch solche Wandsegmente, die im Vergleich zu anderen Wandsegmenten erheblich schneller verschleißen bzw. im gleichen Beobachtungszeitraum stärker verschlissen erscheinen. Dies überraschenderweise regelmäßig, nicht zuletzt auch bei den für Druckgeräte der in Rede stehenden Art typischen Wandstärken, derart, daß bei entsprechender Auswahl der hinsichtlich der Dehnung zu beobachtenden Wandsegmente vergleichsweise große, mithin ohne weiteres meßbare Dehnungsänderungen bzw. -unterschiede auch schon bei geringen, mithin zunächst unkritischen Schädigungen der Wandung provoziert werden können. Darüberhinaus können an der Wandung von solchen Druckgeräten regelmäßig auch einzelne Wandsegmente identifizieren werden, wie z.B. solche im Bereich eines bogenförmigen Abschnitts eines von Fluid durchströmten Rohrs und/oder in einem ein erhöhtes Kavitationsrisiko aufweisenden Bereich eines solchen Rohrs und/oder im Bereich einer abrupten Querschnittsvergrößerung, die bei Belastung bzw. Überlastung eine Gestaltänderung - beispielsweise durch Abtrag von Material aus der dem Lumen zugewandten Oberfläche oder durch plastische Verformung - , mithin eine Schädigung erfahren, deren Ausmaß, etwa hinsichtlich eines Schadensbildes und/oder eines Schädigungsgrades, im Vergleich zu allfälligen Gestaltänderungen bzw. Schädigungen anderer Wandsegmente innerhalb desselben Beobachtungszeitraums erwartungsgemäß signifikant höher sind, bzw. sind umgekehrt typischerweise auch solche Wandsegmente der Wandung identifizierbar, bei denen das Ausmaß einer solchen Gestaltänderung bzw. Schädigung innerhalb des nämlichen Beobachtungszeitraums auch bei höheren Überlastungen erwartungsgemäß signifikant niedriger sind, als bei anderen Wandsegmenten.

Die Erfindung sowie weitere vorteilhafte Ausgestaltungen und Zweckmäßigkeiten davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich.

Im einzelnen zeigen:

Fig. 1, 2    ein als ein In-Line-Meßgerät ausgebildetes Druckgerät in verschiedenen Ansichten;

Fig. 3    schematisch nach Art eines Blockschaltbildes eine Umformer-Elektronik mit daran angeschlossenen Dehnungssensoren zum Erfassen von Dehnungen einer Wandung eines Druckgeräts, insb. eines Druckgeräts gemäß den Fig. 1, 2;

Fig. 4a    schematisch eine Anordnung von an einer Wandung eines Druckgeräts, insb. eines Druckgeräts gemäß den Fig. 1, 2, angebrachten Dehnungssensoren zum Erfassen einer Dehnung eines ersten Wandsegments sowie eines davon beabstandeten zweiten Wandsegments nämlicher Wandung;

Fig. 4b    qualitativ eine Abhängigkeit einer Dehnungsdifferenz vom Ausmaß einer Schädigung der Wandung bzw. eine Abhängigkeit einer nämliche Schädigung quantifizierende Schadenskennzahl von einem nämliche Dehnungsdifferenz repräsentierenden Dehnungsabweichungswert $X_{\Delta\varepsilon}$;

Fig. 5, 6    verschiedene weitere Varianten für eine Anordnung von Dehnungssensoren an einer Wandung eines Druckgeräts, insb. eines Druckgeräts gemäß den Fig. 1, 2;

Fig. 7    ein Druckgerät gemäß den Fig. 1, 2 bzw. 3, umfassend einem mit der Umformer- Elektronik elektrisch verbundenen Drucksensor; und

Fig. 8    ein weitere Variante eines Druckgeräts in perspektivischer Seitenansichter

Fig. 9    Erfindungsgemäße Anordnung von Dehnungssensoren an einer Wandung eines Druckgeräts, gemäß der Fig. 8.

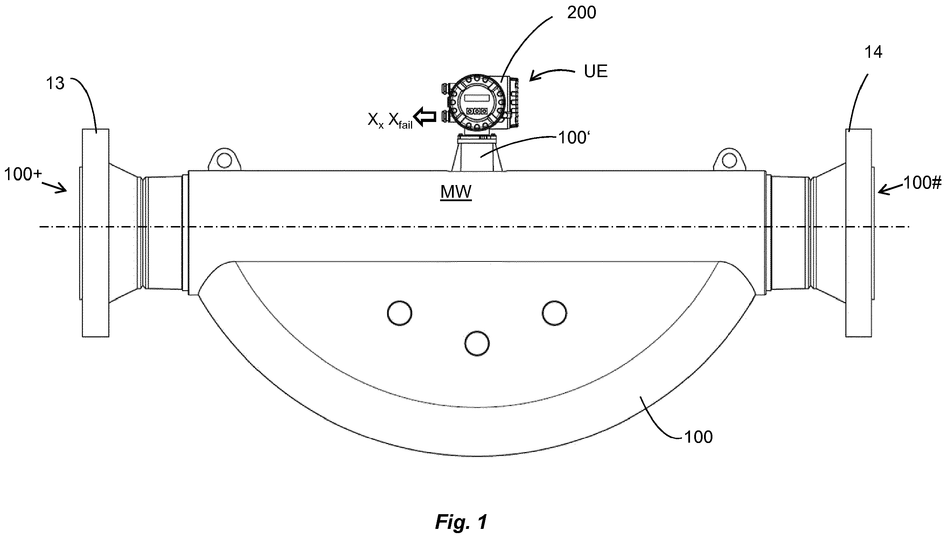

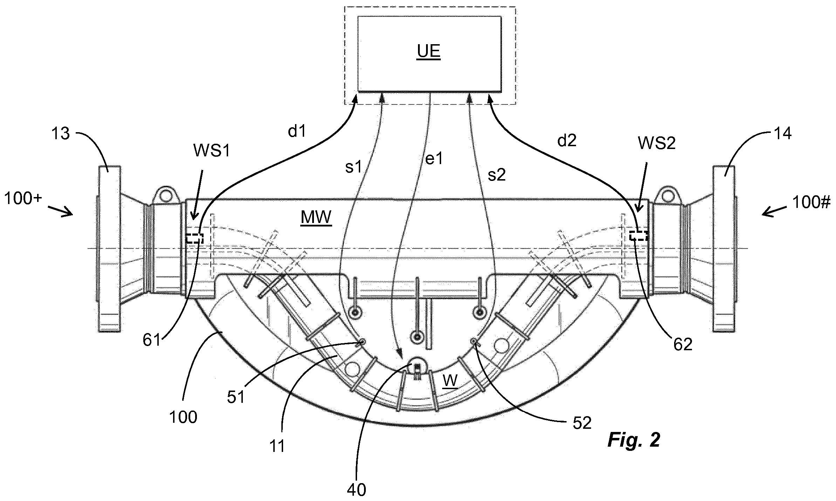

In Fig. 1 und 2 ist schematisch ein Ausführungsbeispiel für ein Druckgerät dargestellt. Das Druckgerät ist dafür vorgesehen, in einem von einer, beispielsweise metallischen, Wandung W umhüllten - hier sich von einem Einlaßende 100+ bis zu einem Auslaßende 100# erstreckenden - Lumen ein Fluid, beispielsweise ein Gas, ein Flüssigkeit oder eine fließfähige, nämlich mittels eines fluiden Dispersionsmedium, ggf. auch erst im Verlauf des Strömungspfades durch Kavitation oder Ausfällung gebildete Dispersion, wie z.B. ein Schaum, eine Suspension oder ein Aerosol, zu führen bzw. für einen gewissen Zeitraum vorzuhalten. Im besonderen ist das Druckgerät ferner dafür eingerichtet und ausgelegt, ein nominell mit einem statischen Druck bzw. einem Überdruck von mehr als 1 bar, insb. auch mehr als 10 bar, auf die, beispielsweise aus einem rostfreien Edelstahl, einer Titanund/oder einer Zirkonium-Legierung hergestellten, Wandung W einwirkenden Fluid im Lumen zu führen, mithin bei bestimmungsgemäßem Gebrauch statischen Drücken von mehr als 1 bar zumindest für eine vorgegebene nominelle Lebensdauer standhalten zu können. Das Druckgerät kann beispielsweise eine Rohrleitung, einen Tank, einen Kessel, insb. auch einen Dampfkessel, und/oder ein Meßrohr bzw. eine Meßkammer eines Meßgeräts, beispielsweise eines Durchfluß-Meßgeräts, umfassen.

Das Druckgerät ist mittels eines als ein In-Line-Meßgerät, nämlich ein in den Verlauf einer - hier nicht gezeigten - Rohrleitung einsetzbaren Meßsystem gebildet, das im Betrieb zumindest zeitweise von in der Rohrleitung geführtem Fluid durchströmt ist, derart, daß das Fluid am Einlaßende 100+ in das Lumen zunächst einströmen, in einer Strömungsrichtung weiter durch das Lumen hindurch und hernach am Auslaßende 100# aus dem Lumen wieder ausströmen gelassen wird. Nämliches Meßsystem, mithin das damit gebildete Druckgerät ist im besonderen dafür eingerichtet, wiederkehrend Meßwerte $X_x$ für wenigstens eine, beispielsweise fluiddynamische und/oder thermodynamische, Meßgröße x, wie etwa einer Volumendurchflußrate v, eine Massendurchflußrate m, einer Dichte ρ, einer Viskosität η, einem Druck p oder einer Temperatur ϑ, des jeweils hindurchströmen gelassenen Fluids zu ermitteln. Das Fluid führenden Lumen, mithin die dieses umgebende Wandung W, ist bei dem im Ausführungsbeispiel gezeigten, nämlich beispielsweise als Coriolis-Massendurchfluß-Meßgerät, Dichte-Meßgerät und/oder Viskositäts-Meßgerät ausgebildeten, Druckgerät mittels einer wenigstens ein - hier abschnittsweise gekrümmtes - Rohr 11 aufweisenden Rohranordnung des - hier dementsprechend als Meßwandler vom Vibrationstyp ausgestalteten - Meßwandlers MW gebildet. In vorteilhafter Weise ist die Rohranordnung, mithin das damit gebildet Druckgerät dahingehend optimiert, bei einem in Strömungsrichtung mit einer mittleren Strömungsgeschwindigkeit von 10 ms$^{-1}$ durch Lumen strömenden, eine Dichte von 1000 kg m$^{-3}$ bzw. eine Vikosität von 1 cP aufweisenden Fluid, beispielsweise also Wasser, vom Einlaßende 100+ bis zum Auslaßende 100# einen Druckverlust von weniger als 5 bar im hindurchströmenden Medium zu provozieren. Solche mittels eines Meßwandlers gebildeten Druckgeräte werden u.a. auch seitens der Anmelderin selbst, beispielsweise als nach dem Coriolisprinzip arbeitende Meßsysteme zur Messung von Massendurchflußraten unter der Typ-Bezeichnung "PROMASS A", "PROMASS E", "PROMASS F", "PROMASS H", "PROMASS I", "PROMASS O", "PROMASS P", "PROMASS S", "PROMASS X" (http://www.de.endress.eom/#products/coriolis), angeboten.

Der Meßwandler dient dem Erfassen der wenigstens einen Meßgröße, derart, daß nämlicher Meßwandler in Wechselwirkung mit dem im Lumen geführten Fluid wenigstens ein von der wenigstens einen Meßgröße abhängiges, beispielsweise elektrisches, Meßsignal s1 generiert. Im Betrieb des Meßsystems wird das wenigstens eine als Meßrohr dienende Rohr 11 des Meßwandlers zwecks der Generierung des wenigstens einen Meßsignals mittels eines auf nämliches Rohr einwirkenden Schwingungserregers aktiv zu mechanischen Schwingungen angeregt, beispielsweise zu Biegeschwingungen um eine gedachte Schwingungsachse mit einer momentanen Resonanzfrequenz der Rohranordnung, und nämliche Schwingungen mittels wenigstens eines auf Bewegungen des wenigstens einen Rohrs 11 reagierenden Schwingungssensors in wenigstens ein als Meßsignal s1 für die Meßgröße dienendes Schwingungssignal mit wenigstens einem von der Meßgröße abhängigen Signalparameter, beispielsweise einer Signalamplitude, einer Signalfrequenz oder einem Phasenwinkel, gewandelt.

Für den erwähnten Fall, daß es sich bei dem Meßsystem, mithin dem damit gebildeten Druckgerät um ein Coriolis-Massendurchfluß-Meßgerät handelt, weist der Meßwandler wenigstens zwei voneinander beabstandete Schwingungssensoren zum Erzeugen von zwei Schwingungssignalen s1, s2 mit jeweils einer von der Massendurchflußrate abhängigen Phasenwinkel.

Der hier gezeigte Meßwandler ist - wie bei marktgängigen, zumal für die industrielle Meß- und Automatisierungstechnik geeigneten Meßwandlern der in Rede stehenden Art, nicht zuletzt auch für Meßwandler vom Vibrationstyp, durchaus üblich - als vorkonfektionierte, mithin in den Verlauf der jeweiligen Rohrleitung direkt einsetzbare eigenständige Baueinheit mit einem jeweils ein- und auslaßseitig - hier nämlich im Bereich sowohl des Einlaßendes 100+ als auch des Auslaßendes 100# - mit der Rohranordnung mechanisch gekoppelten und nämliche Rohranordnung wie auch allfällig daran angebrachte Anbauteile, wie z.B. Schwingungssensoren bzw. Schwingungserreger, in einer, insb. nach gegenüber der umgebenden Atmosphäre hermetisch dichte, Kavität aufnehmenden Meßwandler-Gehäuse 100 realisiert. Für den für mittels eines In-Line-Meßgeräts gebildete Druckgeräte typischen Fall, daß das jeweilige Druckgerät wieder lösbar mit der Rohrleitung zu montieren ist, können, wie auch in Fig. 1 bzw. 2 angedeutet bzw. aus deren Zusammenschau ohne weiteres ersichtlich, einlaßseitig, nämlich im Bereich des Einlaßendes 100+ des Druckgeräts ein erster Anschlußflansch 13 für den Anschluß an ein Fluid zuführendes Leitungssegment der Rohrleitung und auslaßseitig, nämlich im Bereich des Auslaßendes 100# des Druckgeräts ein zweiter Anschlußflansch 14 für ein Fluid wieder abführendes Leitungssegment der Rohrleitung vorgesehen sein. Die Anschlußflansche 13, 14 können hierbei, wie bei solchen Druckgeräten, nicht zuletzt auch bei mittels eines Meßwandlers vom Vibrationstyp gebildeten Druckgeräten, durchaus üblich, endseitig in das Meßwandler-Gehäuse 100 integriert sein.

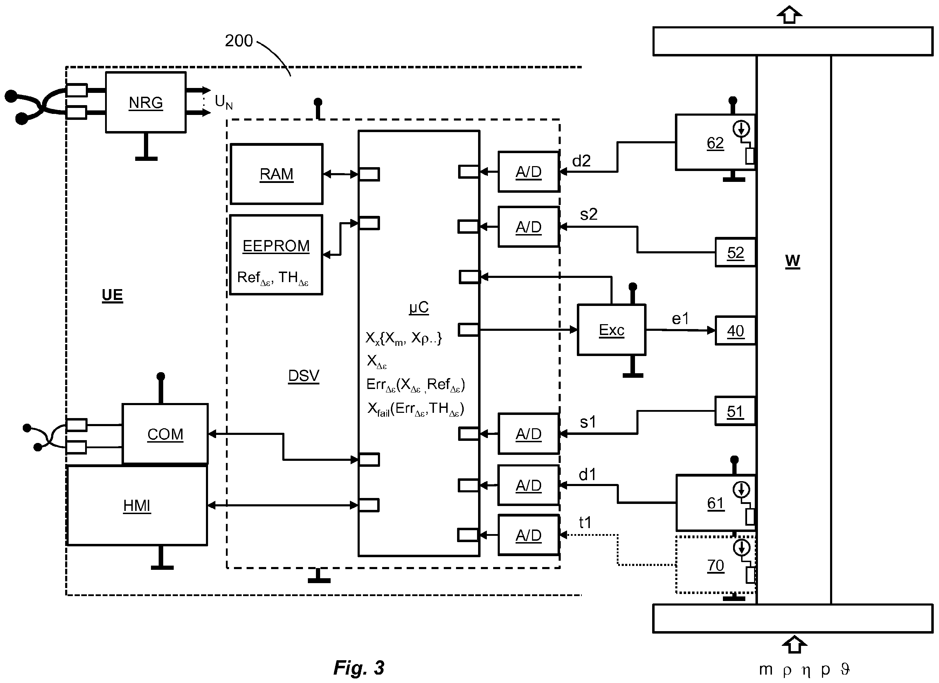

Zum Auswerten des wenigstens einen von der wenigsten einen Meßgröße abhängigen Meßsignals s1, nämlich zum Erzeugen von wenigstens einem die zu erfassenden Meßgröße repräsentierenden Meßwerts unter Verwendung des Meßsignals, sowie ggf. auch zum Ansteuern des Meßwandlers weist das Meßsystem, mithin das damit gebildet Druckgerät ferner eine mit dem Meßwandler MW elektrisch, beispielsweise auch via elektrische Anschlußleitung, gekoppelte, beispielsweise mittels eines oder mehrerer Mikroprozessoren gebildete, Umformer-Elektronik UE auf, von der in Fig. 3 schematisch nach Art eines Blockschaltbilds ein Ausführungsbeispiel gezeigt ist. Das elektrische Anschließen des Meßwandlers MW an die Umformer-Elektronik UE kann mittels entsprechender Anschlußleitungen erfolgen, die aus dem Elektronik-Gehäuse 200, beispielsweise mittels einer druck- und/oder explosionsfester Kabeldurchführung, heraus- bzw. in das Meßwandler-Gehäuse 100 hineingeführt sind. Die Umformer Elektronik UE kann, wie in Fig. 1 bzw. Fig. 3 schematisch angedeutet und wie bei Meßsystemen der in Rede stehenden Art durchaus üblich, in einem schlag- und/oder druckfesten, beispielsweise auch explosionsfesten, Elektronik-Gehäuse 200, das, wie beispielsweise auch in der eingangs erwähnten US-A 2011/0265580 oder US-A 2012/0123705 gezeigt, unter Bildung eines In-Line-Meßgeräts in Kompaktbauweise direkt am Meßwandler-Gehäuse 100, beispielsweise an einem entsprechenden, ggf. auch die vorgenannte Kabeldurchführung aufnehmenden, Haltestutzen 100' des Meßwandler-Gehäuses 100, gehaltert sein kann. Die, beispielsweise im Betrieb von extern via Anschlußkabel und/oder mittels interner Energiespeicher mit elektrischer Energie versorgte, Umformer-Elektronik UE kann zudem, wie bei solchen Meßsystemen der industriellen Meß- und Automatisierungstechnik durchaus üblich, über entsprechende elektrische Leitungen und/oder drahtlos per Funk mit einem von der Umformer-Elektronik UE räumlich entfernt angeordneten, ggf. auch räumlich verteilten, übergeordneten elektronischen Meßdatenverarbeitungssystem elektrisch verbunden sein, an das vom Meßsystem im Betrieb für die jeweilige Meßgröße erzeugte Meßwerte mittels eines diese entsprechend tragenden Meßwertesignals zeitnah weitergegeben werden, beispielsweise auch in Echtzeit.

Die mit dem Meßwandler UE im Betrieb kommunizierende, nämlich dessen Meßsignale s1, s2 empfangende und hier zudem auch via Treibersignal e1 den Meßwandler MW ansteuernde, Umformer-Elektronik UE erzeugt im hier gezeigten Ausführungsbeispiel unter Verwendung des wenigstens einen Meßsignals s1 wiederholt wenigstens einen die wenigstens eine Meßgröße x momentan repräsentierenden Meßwert, beispielsweise also einen Massendurchfluß-Meßwert $X_m$, einen Volumendurchfluß-Meßwert $X_v$, einen Dichte-Meßwert $X_\rho$, und/oder einen Viskositäts-Meßwert $X_\eta$. Dafür weist die Umformer-Elektronik UE, wie auch in Fig. 3 schematisch dargestellt, eine dem Ansteuern des - hier als Meßwandler vom Vibrationstyp ausgebildeten - Meßwandlers dienende Treiber-Schaltung Exc sowie eine Meßsignale s1, s2, des Meßwandlers MW verarbeitende, beispielsweise im Betrieb mit der Treiber-Schaltung Exc direkt kommunizierende, Meß- und Auswerte-Schaltung DSV auf, die im Betrieb die wenigstens eine Meßgröße x repräsentierende Meßwerte $X_x$ liefert. Jedes der vom Meßwandler MW gelieferten Meßsignale $s_1$, $s_2$ ist im hier gezeigten Ausführungsbeispiel der, beispielsweise mittels eines Mikroprozessors $\mu C$ und/oder mittels eines digitalen Signalprozessors (DSP) sowie mittels entsprechender Analog-zu-Digital-Wandler A/D zum Digitalisieren der Meßsignale, entsprechender nicht-flüchtiger Speicher EEPROM zum persistenten Speichern von Ablaufprogrammen für den Mikroprozessor und/oder von Betriebsparametern des Meßsystems sowie entsprechender flüchtiger Speicher RAM zum Speichern auszuführender Programm-Codes und/oder digitalen Meßwerten, realisierten, Meß- und Auswerteschaltung DSV über einen separaten, hier mittels jeweils eines zugeordneten Analog-zu-Digital-Wandler A/D zugeführt.

Im hier gezeigten Ausführungsbeispiel dient die Meß- und Auswerteschaltung $\mu C$ der Umformer-Elektronik UE u.a. auch dazu, unter Verwendung der vom Meßwandler MW gelieferten Meßsignale $s_1$, $s_2$, beispielsweise anhand einer zwischen den Meßsignalen $s_1$, $s_2$ detektierten Phasendifferenz, wiederkehrend einen Massendurchfluß-Meßwert $X_m$ zu ermitteln, der eine Massendurchflußrate des im Meßwandler strömenden Fluids repräsentiert. Alternativ oder in Ergänzung zur Ermittlung des Massendurchfluß-Meßwert $X_m$ kann die Umformer-Elektronik UE des hier gezeigten Meßsystems auch dazu dienen, abgleitet von einer anhand der Meßsignale s1, s2 oder beispielsweis auch des Errgersignals e1 ermittelten momentanen Schwingungsfrequenz des vibrieren gelassenen Rohrs 11 einen Dichte-Meßwert zu erzeugen, der eine Dichte des im Meßwandler strömenden Fluids repräsentiert. Ferner kann die Umformer-Elektronik UE wie bei derartigen Meßsystemen durchaus üblich ggf. auch dazu verwendet werden, einen eine Viskosität des im Meßwandler strömenden Fluids repräsentierenden Viskositäts-Meßwert $X_\eta$ zu ermitteln, vgl. hierzu auch die eingangs erwähnten US-A 57 96 011, US-B 72 84 449, US-B 70 17 424, US-B 69 10 366, US-B 68 40 109, US-A 55 76 500, oder US-B 66 51 513. Zur Ermittlung der zum Bestimmen der Viskosität erforderlichen Erregerenergie oder Erregerleistung bzw. Dämpfung eignet sich dabei beispielsweise das von Treiberschaltung der Umformer-Elektronik gelieferte Erregersignal und/oder auch ein dem Einstellen des Treibersignals dienendes internes Steuersignal der Umformer-Elektronik UE.

Zum Visualisieren von Meßsystem intern erzeugten Meßwerten $X_x$ und/oder gegebenenfalls Meßsystem intern generierten Statusmeldungen, wie etwa einer Fehlermeldung und/oder einem Alarm, vor Ort kann das Meßsystem desweiteren ein mit der Umformer-Elektronik UE kommunizierendes Anzeige- und Bedienelement HMI aufweisen, wie etwa ein im Elektronikgehäuse 200 hinter einem darin entsprechend vorgesehenen Fenster plaziertes LCD-, OLED- oder TFT-Display zuzüglich einer entsprechende Eingabetastatur und/oder ein Touchscreen. Darüberhinaus sind in der, beispielsweise auch re-programmierbaren und/oder fernparametrierbaren, Umformer-Elektronik UE weitere, dem Betrieb des Meßsystems dienende Elektronik-Komponenten vorgesehen, wie etwa eine, beispielsweise mittels eines Schaltnetzteils gebildete, interne Energieversorgungsschaltung NRG zum Bereitstellen interner Versorgungsspannungen $U_N$ oder auch eine dem Anschluß an ein übergeordnetes Meßdatenverarbeitungssystem und/oder einen Feldbus dienende Kommunikationsschaltung COM. In vorteilhafter Weise kann nämliche Kommunikationsschaltung COM beispielsweise auch dafür eingerichtet sein, daß die damit gebildete Umformer-Elektronik UE im Betrieb mit einem diesem übergeordneten elektronischen Meßdatenverarbeitungssystem, beispielsweise einer speicherprogrammierbaren Steuerung (SPS), einem Personalcomputer und/oder einem Prozeß-Leitsystem, über ein innerhalb des übergeordneten Datenverarbeitungssystems vorgesehenen - leitungsgebundenen und/oder funkbasierten - Datenübertragungsnetzwerk, beispielsweise einem Feldbus und/oder industriellen Funknetz -, Meß- und/oder andere Betriebsdaten austauschen kann, wie etwa aktuelle Meßwerte oder der Steuerung des Meßsystems dienende Einstell- und/oder Diagnosewerte. Zudem kann die beispielsweise auch die interne Energieversorgungsschaltung NRG im Betrieb von einer im Datenverarbeitungssystem vorgesehen externen Energieversorgung gespeist werden.

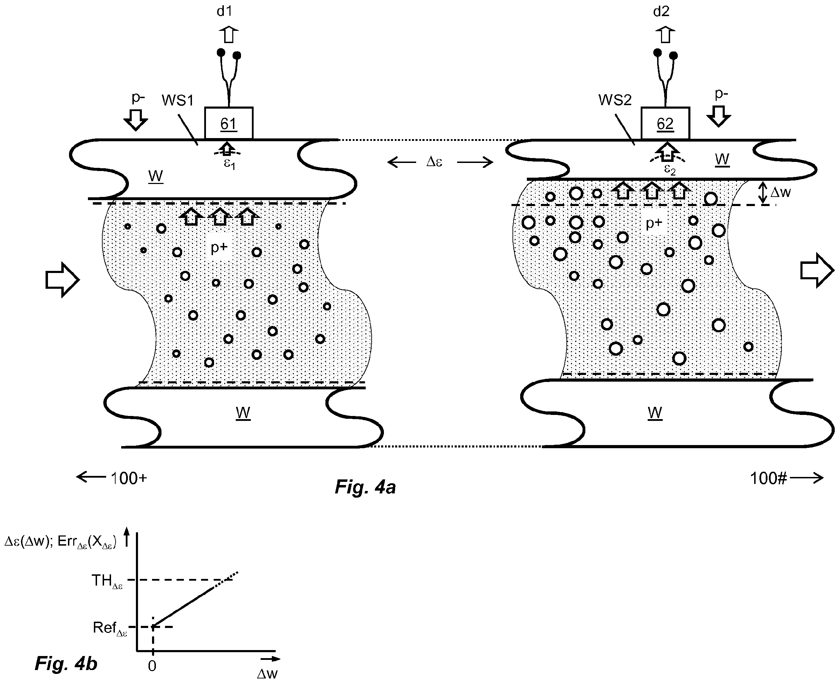

Wie bereits erwähnt können die Wandungen von Druckgeräten der in Rede stehenden Art infolge von Überbelastungen, sei es durch Betreiben des jeweiligen Druckgeräts mit über vorab vereinbarte Grenzwerte hinausgehenden Prozeßparametern - wie etwa einem zu hohen Betriebsdruck, einer zu hohen Betriebstemperatur und/oder einer zu hohen Strömungsgeschwindigkeit - oder auch durch Beaufschlagen mit einem für das Druckgerät ungeeigneten - beispielsweise einem die Wandung abschleifenden und/oder die Wandung chemisch angreifenden - Fluid, zumindest partiell in erheblichem Maße beschädigt werden; dies unter Umständen auch derart, daß das jeweilige Druckgerät - etwa infolge einer plastischen Verformung der Wandung und/oder, wie auch in Fig. 4a schematisch dargestellt, infolge eines Verschleißes $\Delta w$ der Wandung, nämlich eines Materialabtrags aus deren dem Lumen zugewandten Oberfläche, einhergehend mit einer Verringerung einer Wandstärke der Wandung - nur noch eine verminderte Druckfestigkeit bzw., im Falle, daß das Druckgerät als Meßsystem ausgestaltet ist, nur noch eine verminderte Meßgenauigkeit aufweist.

Um möglichst frühzeitig eine derartige Schädigung der Wandung W detektieren zu können, beispielsweise auch bereits in einem Anfangsstadium, nämlich bevor die Schädigung als für das Druckgerät hinsichtlich seiner (noch verbliebenen) Druckfestigkeit oder ggf. hinsichtlich seiner (noch verbliebenen) Meßgenauigkeit als kritisch einzustufen ist, bzw. um eine solche Schädigung, nicht zuletzt auch unter Vermeidung allfälliger Fehlalarme, gesichert vermelden zu können, ist das Meßsystem, mithin das damit gebildete Druckgerät im besonderen auch dafür eingerichtet, sowohl eine Dehnung $\varepsilon_1$ eines ersten Wandsegments WS1 der Wandung W als auch eine Dehnung $\varepsilon_2$ zumindest eines vom ersten Wandsegment WS1 beabstandeten zweiten Wandsegments WS2 der Wandung zu erfassen, um, davon abgeleitet, einen eine Dehnungsdifferenz $\Delta\varepsilon$, nämlich einen Differenz $\varepsilon_1 - \varepsilon_2$ (bzw. $\varepsilon_2 - \varepsilon_1$) zwischen der Dehnung $\varepsilon_1$ des ersten Wandsegments WS1 und der Dehnung $\varepsilon_2$ des zweiten Wandsegments WS2, bzw. einen Dehnungsquotienten, nämlich einen Quotienten $\varepsilon_1 / \varepsilon_2$ (bzw. $\varepsilon_2 / \varepsilon_1$) zwischen der Dehnung $\varepsilon_1$ des ersten Wandsegments WS1 und der Dehnung $\varepsilon_2$ des zweiten Wandsegments WS2, repräsentierenden, beispielsweise auch digitalen, Dehnungsabweichungswerts $X_{\Delta\varepsilon}$ zu ermitteln.

Unter Ausnutzung einer der Wandung naturgemäß innewohnenden Abhängigkeit der Dehnungsdifferenz $\Delta\varepsilon$ vom Ausmaß der Schädigung der Wandung, im Falle eines Verschleißes $\Delta w$ nämlich beispielsweise derart, daß, wie auch in Fig. 4b exemplarisch gezeigt, die Dehnungsdifferenz $\Delta_\varepsilon$, beispielsweise infolge einer Beaufschlagung der Wandung mit einem über 1 bar liegenden Druck, mit zunehmendem Verschleiß $\Delta w$ ansteigt, ist das Meßsystem zudem dafür eingerichtet, die Schädigung der Wandung unter Verwendung des Dehnungsabweichungswerts $X_{\Delta\varepsilon}$ zu ermitteln; dies z.B. in der Weise, daß anhand eines in einem Beobachtungszeitraum beobachteten Ansteigens des Dehnungsabweichungswerts $X_{\Delta\varepsilon}$ und/oder durch Ermitteln einer signifikanten Abweichung des Dehnungsabweichungswerts $X_{\Delta\varepsilon}$ von einem vorgegebenen Soll- oder Referenzwert auf eine Schädigung der Wandung geschlossen wird.

Die für die Ermittlung der Schädigung der Wandung erforderliche Dehnung der Wandsegmente WS1, WS2 kann z.B. dadurch bewirkt werden, daß im Betrieb des Druckgeräts eine zwischen einem innerhalb des Lumens herrschenden statischen Innendruck p+ und einem von außen auf die Wandung wirkenden Umgebungsdruck p- existierenden Druckdifferenz (Relativdruck $p_{rel}$) verändert wird, wodurch zumindest Teilbereiche der Wandung, nämlich zumindest das erste Wandsegment WS1 und zumindest das zweite Wandsegment WS2 elastisch deformiert werden. Nachdem Druckgeräte der in Rede stehenden Art wie bereits mehrfach erwähnt, dafür eingerichtet sind, innerhalb des jeweiligen Lumens ein Fluid zu führen, das einen um mindestens 0.5 bar über dem Umgebungsdruck p- liegenden Druckwert p+aufweist, kann ohne weiteres davon ausgegangen werden, daß im Betrieb des jeweiligen Druckgeräts regelmäßig eine solche, nämlich für eine auf einer elastischen Verformung der Wandung basierende Ermittlung der Schädigung der Wandung ausreichende Druckdifferenz vorliegt, dies nicht zuletzt auch für den im Ausführungsbeispiel gezeigten Fall, daß das Druckgerät mittels wenigstens eines Meßrohrs zum Führen von strömendem Fluid gebildet ist. Es kann auch hierbei ohne weiteres davon ausgegangen, daß allein schon durch das betriebsgemäße Ein- bzw. wieder Ausströmenlassen des Fluids bei solchen Druckgeräten eine für die Detektion einer allfälligen Schädigung der Wandung ausreichende Erhöhung der Druckdifferenz zu verzeichnen ist bzw. daß es zum Erhöhen des innerhalb des Lumens herrschenden statischen Innendrucks auf den höheren Druckwert in der Regel ausreicht, Fluid mit dem nominellen Betriebsdruck durch das Lumen des Druckgeräts strömen zu lassen. Wie bereits angedeutet, liegen nämlich typischerweise die Druckwerte für den Innendruck p+ bei Druckgeräten der in Rede stehenden Art, nicht zuletzt auch bei mittels wenigstens eines Meßrohrs zum Führen von strömendem Fluid gebildeten Druckgeräten, im normalen Betrieb zumindest zeitweise deutlich über 10 bar. Für den anderen erwähnten Fall, daß die Wandung des Druckgeräts eine plastische, mithin nicht reversiblen Verformung erfahren hat, enthalten die Dehnungsdifferenz $\Delta\varepsilon$ bzw. der diese repräsentierenden Dehnungsabweichungswerts $X_{\Delta\varepsilon}$ neben einer mit der der Druckdifferenz folgenden elastischen Verformung der Wandung korrespondierenden, mithin zeitlich schwankenden Komponente zudem jeweils auch eine von der momentanen Druckdifferenz weitgehend unabhängige, mithin nichtflüchtige Komponente, deren Höhe einem Ausmaß der plastischen Verformung der Wandung zzgl. einer allfälligen Vorspannung des Dehnungssensors entspricht.

Zum Erfassen der vorgenannten Dehnungen der Wandung umfaßt das Meßsystem gemäß einen am Wandsegment WS1 fixierten - beispielsweise mittels eines resistiven oder piezoresistiven Dehnmeßstreifen (DMS) gebildeten - ersten Dehnungssensor 61 zum Erzeugen eines von der Dehnung nämlichen Wandsegments WS1 abhängigen ersten Dehnungssignals d1 und wenigstens einen an dem vom Wandsegment WS1 beabstandeten Wandsegment WS2 fixierten - beispielsweise mittels eines resistiven oder piezoresistiven Dehnmeßstreifen gebildeten und/oder zum ersten Dehnungssensor baugleichen - zweiten Dehnungssensor 62 zum Erzeugen eines von der Dehnung des Wandsegments WS2 abhängigen zweiten Dehnungssignals d2. Dehnungssignal d1 bzw. d2 kann hierbei z.B. jeweils ein (zunächst) analoges elektrisches Signal mit einer von der jeweils zu erfassenden Dehnung abhängigen elektrischen Spannung und/oder einem von nämlicher Dehnung abhängigen elektrischen Strom sein. Jeder der Dehnungssensoren 61, 62 kann beispielsweise jeweils mittels eines von außen, nämlich auf einer dem Lumen abgewandten, mithin nicht vom darin geführten Fluid kontaktierten Oberfläche auf das jeweilige Wandsegment WS1 bzw. WS2 aufgeklebten Dehnmeßstreifen (DMS), jeweils mit einem vorgegebene nominellen Widerstandswert $R_0$ (Nennwiderstand), beispielsweise von 500 $\Omega$ (Ohm), und einer vorgegeben Empfindlichkeit k (k-Faktor), beispielsweise von 100, gebildet sein. Sowohl der den Dehnungssensor 61 bildende Dehnmeßstreifen als auch der den Dehnungssensor 62 bildende Dehnmeßstreifen können in vorteilhafter Weise ferner so angeordnet sein, daß jeder der beiden, ggf. auch jeweils unter Vorspannung gehaltenen, Dehnmeßstreifen vorwiegend eine azimutale, nämlich einer Umfangsänderung entsprechende bzw. in einer Umfangsrichtung orientierte Dehnung des jeweiligen Wandsegments WS1 bzw. WS2 erfaßt; alternativ dazu kann aber auch zumindest einer oder auch jeder der Dehnmeßstreifen so angeordnet sein, daß damit vorwiegend eine axiale, nämlich in einer Längsrichtung des von der Wandung umhüllten Lumens - im hier gezeigten Ausführungsbeispiel also auch in der Strömungsrichtung - orientierte Dehnung erfaßt wird.

Zum Erzeugen des jeweiligen Dehnungssignals d1 bzw. d2 kann jeder der beiden, beispielsweise baugleichen, Dehnmeßstreifen (DMS) im Betrieb von einem von einer, beispielsweise im jeweiligen Dehnungssensor vorgesehenen, Konstantstromquelle getriebenen eingeprägten, mithin bekannten elektrischen Strom $I_{DMS}$ durchflossen sein, derart, daß eine über dem jeweiligen Dehnmeßstreifen abfallende elektrische Spannung $U_{DMS1}$ bzw. $U_{DMS2}$ als Dehnungssignal d1 bzw. d2 dient. In Kenntnis der einem solchen Dehnungssensor jeweils innewohnenden Abhängigkeit $U_{DMS1} = I_{DMS} \cdot R_0 (1 + k \cdot \varepsilon_1)$ bzw. $U_{DMS2} = I_{DMS} \cdot R_0 (1 + k \cdot \varepsilon_2)$ der jeweiligen momentanen Spannung $U_{DMS1}$ bzw. $U_{DMS2}$ von der jeweiligen momentan erfaßten Dehnung kann hernach die jeweilige Dehnung ohne weiteres auch numerisch ermittelt, mithin quantifiziert werden. Alternativ oder in Ergänzung zu der hier gezeigten Auswertung zunächst separat digitalisierter Dehnungssignale d1, d2, kann die Ermittlung des Dehnungsabweichungswerts $X_{\Delta\varepsilon}$ beispielsweise auch dadurch erfolgen, indem mittels der beiden - beispielsweise jeweils als Dehnmeßstreifen (DMS) ausgebildeten - Dehnungssensoren 61, 62, zuzüglich entsprechender Referenzwiderstände, eine Wheatstonesche Meßbrücke gebildet wird, derart, daß nämliche Wheatstonesche Meßbrücke von einer in der entsprechend bereitgestellten Referenzspannung getrieben ist und eine Diagonalspannung nämlicher Meßbrücke bzw. ein davon abgeleiteter Digitalwert die Dehnungsdifferenz $\Delta\varepsilon$ repräsentiert.

Die Dehnungssensoren 61, 62 sind, wie auch in Fig. 2 oder 3 schematisch dargestellt bzw. aus deren Zusammenschau ohne weiteres ersichtlich, mit der Umformer-Elektronik UE, hier nämlich mit deren Meß- und Auswerteschaltung DSV, elektrisch gekoppelt. Die Umformer-Elektronik UE ist bei dieser Ausgestaltung der Erfindung ferner dafür eingerichtet, beispielsweise durch entsprechende Programmierung der Meß- und Auswerteschaltung DSV, sowohl das Dehnungssignal d1 als auch das Dehnungssignal d2 zu empfangen, sowie unter Verwendung sowohl des Dehnungssignals d1 als auch des Dehnungssignals d2 nämliche Schädigung der Wandung zu ermitteln; dies im besonderen in der Weise, daß die Umformer-Elektronik UE mittels der Dehnungssignale d1, d2 zunächst den Dehnungsabweichungswert $X_{\Delta\varepsilon}$ ermittelt und diesen hernach verwendet um die Schädigung der Wandung zu detektieren bzw. deren Ausmaß zu ermitteln. Im hier gezeigten Ausführungsbeispiel ist jedes der Dehnungssignale d1, d2 zwecks Wandlung der Dehnungssignale d1, d2 in als digitale Dehnungssignale dienende Abtastfolgen einem jeweils zugehörigen Analog-zu-Digital-Wandler A/D zugeführt, von welchen Analog-zu-Digital-Wandlern A/D der das Dehnungssignale d1 empfangende eine nämliches Dehnungssignale d1 repräsentierende Abtastfolge bzw. der das Dehnungssignale d2 empfangende eine nämliches Dehnungssignale d2 repräsentierende Abtastfolge liefert; alternativ kann jedes der Dehnungssignale auch über einen Multiplexer sequentiell auf ein und denselben Analog-zu-Digital-Wandler A/D geführt und damit sequentiell in die jeweilige Abtastfolge gewandelt werden. Der Dehnungsabweichungswert $X_{\Delta\varepsilon}$ kann basierend auf den beiden Dehnungssignalen beispielsweise dadurch ermittelt werden, daß sowohl vom Dehnungssignal d1 als auch vom Dehnungssignal d2 jeweils wenigstens ein Parametermeßwert für einen das jeweilige Dehnungssignal charakterisierenden, nicht zuletzt aber auch mit der naturgemäß zeitlich veränderlichen Dehnung $\varepsilon_1$ bzw. $\varepsilon_2$ möglichst gut korrelierten Signalparameter, beispielsweise also ein Momentanwert eines jeden der beiden Dehnungssignale, ermittelt werden und hernach eine Differenz und/oder ein Quotient nämlicher Parametermeßwerte gebildet und als Dehnungsabweichungswert $X_{\Delta\varepsilon}$ verwendet wird. Als Signalparameter können anstelle des Momentanwerts hierbei aber auch andere Lageparameter, wie z.B. ein Effektivwert (RMS), und/oder auch Streuungsparameter, wie z.B. eine Varianz eines jeden der beiden Dehnungssignale dienen. Die Meß- und Auswerteschaltung DSV ist daher gemäß einer weiteren Ausgestaltung zudem dafür eingerichtet, basierend auf nämlichen Abtastfolgen jeweils zunächst einen die Dehnung $\varepsilon_1$, beispielsweise auch im zeitlichen Mittel, repräsentierenden digitalen Dehnungswert $X_{\varepsilon 1}$ sowie ein die Dehnung $\varepsilon_2$, beispielsweise auch im zeitlichen Mittel, repräsentierenden digitalen Dehnungswert $X_{\varepsilon 2}$ zu ermitteln und hernach damit den Dehnungsabweichungswert $X_{\Delta\varepsilon}$ als eine Differenz $X_{\varepsilon 1} - X_{\varepsilon 2}$ (bzw. $X_{\varepsilon 2} - X_{\varepsilon 1}$) und/oder als einen Quotienten $X_{\varepsilon 1} / X_{\varepsilon 2}$ (bzw. $X_{\varepsilon 2} / X_{\varepsilon 1}$) nämlicher Dehnungswerte $X_{\varepsilon 1}$, $X_{\varepsilon 2}$ und/oder als eine auf einen der Dehnungswert $X_{\varepsilon 1}$, $X_{\varepsilon 2}$ normierte Differenz der Dehnungswerte, beispielsweise in der Form $(X_{\varepsilon 1} - X_{\varepsilon 2}) / X_{\varepsilon 1}$ $= 1 - X_{\varepsilon 2} / X_{\varepsilon 1}$, zu bilden.

Das Ermitteln der Schädigung der Wandung unter Verwendung des Dehnungsabweichungswerts $X_{\Delta\varepsilon}$ kann z.B. dadurch erfolgen, daß der Dehnungsabweichungswert $X_{\Delta\varepsilon}$ mittels der Meß- und Auswerteschaltung DSV mit einer vorab ermittelten initialen Dehnungsdifferenz $\Delta\varepsilon_0$ als Referenzwert verrechnet wird, etwa durch einen simplen Vergleich mit derselben und/oder durch Ermitteln einer Abweichung der momentanen Dehnungsdifferenz von nämlicher initialen Dehnungsdifferenz. Die initiale Dehnungsdifferenz kann z.B. für das jeweilige Druckgerät bei einer Kalibrierung im Herstellerwerk für das Druckgerät und/oder bei Inbetriebnahme vor Ort, mithin mit (noch) unversehrter Wandung, ermittelt und hernach in der Umformer-Elektronik UE abgespeichert werden, beispielsweise im erwähnten nichtflüchtigen Speicher EEPROM der Meß- und Auswerteschaltung DSV; alternativ oder in Ergänzung kann nämliche initiale Dehnungsdifferenz aber auch für ein bau- oder zumindest typgleiches anderes Druckgerät, beispielsweise im Herstellerwerk, ermittelt und hernach entsprechend an die Umformer-Elektronik bzw. Umformer-Elektroniken anderer typ- oder baugleicher Druckgeräte übertragen werden.

Gemäß einer weiteren Ausgestaltung der Erfindung ist ferner vorgesehen, basierend auf der ermittelten Schädigung, nämlich für den Fall, daß die Schädigung ein für das Druckgerät vorgegebenes kritisches Maß übersteigt, eine entsprechende, nämlich eine kritische Schädigung der Wandung, beispielsweise auch visuell und/oder akustisch wahrnehmbar, signalisierende Warnmeldung $X_{fail}$ zu generieren. Kritische Schädigung kann beispielsweise eine einer für das Druckgerät vorab festgelegte maximal zulässigen Schädigung der Wandung entsprechende und/oder eine Inspektion des Druckgeräts bedingende Schädigung sein. Die Warnmeldung $X_{fail}$ kann im hier gezeigten Ausführungsbeispiel mittels der Meß- und Auswerteschaltung DSV erzeugt und via Anzeige- und Bedienelement HMI und/oder via Kommunikationsschaltung COM ausgegeben werden.

Nach einer weiteren Ausgestaltung der Erfindung ist ferner vorgesehen, die Schädigung der Wandung quantitativ zu ermitteln, indem basierend auf den Dehnungssignalen d1, d2 bzw. dem Dehnungsabweichungswert $X_{\Delta\varepsilon}$ ein Schadenswert $Err_{\Delta\varepsilon}$, nämlich ein Kennzahlwert für eine die Schädigung der Wandung quantifizierende Schadenskennzahl ermittelt wird. Die Schadenskennzahl kann z.B. als eine - absolute oder relative - Abweichung der Dehnungsdifferenz von einem dafür vorab ermittelten, Druckgerät spezifischen Refe-

renzwert $Ref_{\Delta\varepsilon}$ definiert sein. In vorteilhafter Weise kann die Schadenskennzahl dabei z.B. so definiert sein, daß, wie auch in Fig. 4b vereinfacht dargestellt, der Schadenswert $Err_{\Delta\varepsilon}$ mit zunehmender Schädigung gleichfalls zunimmt.

Nämlicher Referenzwert $Ref_{\Delta\varepsilon}$ kann, wie bereits angedeutet, z.B. der vorbezeichneten initialen Dehnungsdifferenz entsprechen, mithin in der vorgenannten Weise vorab für das jeweilige Druckgerät mit unversehrter Wandung oder vorab an einem baugleichen anderen Druckgerät ermittelt und hernach in der Umformer-Elektronik UE, beispielsweise im nicht-flüchtigen Speicher EEPROM, hinterlegt werden. Alternativ dazu kann aber beispielsweise auch einer der beiden erwähnten Dehnungswerte $X_{\varepsilon1}$, $X_{\varepsilon2}$ als Referenzwert $Ref_{\Delta\varepsilon}$ dienen, beispielsweise jener, der die Dehnung des regelmäßig kaum bzw. im Vergleich zum anderen der beiden Wandsegment WS1, WS2 typischerweise weniger geschädigten Wandsegments repräsentiert. Bei der in Fig. 4a dargestellten Situation ist also beispielsweise der vom Dehnungssignalen d1 abgeleitete, mithin die Dehnung $\varepsilon1$ des Wandsegment WS1 repräsentierende Dehnungswert $X_{\varepsilon1}$ besonders geeignet, als Referenzwert $Ref_{\Delta\varepsilon}$ verwendet zu werden ($X_{\varepsilon1} \rightarrow Ref_{\Delta\varepsilon}$).

Für den erwähnten Fall, daß die Schadenskennzahl als eine relative Abweichung der Dehnungsdifferenz von dem dafür vorab ermittelten, Druckgerät spezifischen Referenzwert $Ref_{\Delta\varepsilon}$ definiert ist, kann der Schadenswert $Err_{\Delta\varepsilon}$ mittels der der Meß- und Auswerteschaltung DSV beispielsweise so berechnet werden, mithin kann die Umformer-Elektronik ferner so eingerichtet sein, daß der jeweilige Schadenswert $Err_{\Delta\varepsilon}$ die Bedingung:

$$Err_{\Delta\varepsilon} = 1 - \frac{X_{\Delta\varepsilon}}{Ref_{\Delta\varepsilon}}$$

erfüllt. Alternativ oder in Ergänzung kann der Schadenswert $Err_{\Delta\varepsilon}$ mittels der der Meß- und Auswerteschaltung DSV aber auch so berechnet werden, mithin kann die Umformer-Elektronik UE ferner auch so eingerichtet sein, daß der Schadenswert $Err_{\Delta\varepsilon}$ die Bedingung:

$$Err_{\Delta\varepsilon} = Ref_{\Delta\varepsilon} - X_{\Delta\varepsilon}$$

erfüllt, mithin einer absoluten Abweichung des Dehnungsabweichungswerts $X_{\Delta\varepsilon}$ vom zugehörigen Referenzwert $Ref_{\Delta\varepsilon}$ entspricht. Der Schadenswert $Err_{\Delta\varepsilon}$ kann im weiteren auch dafür verwendet werden, zu ermitteln, ob eine Schädigung der Wandung bereits stattgefunden hat (oder ob nicht) bzw. auch zu ermitteln, welches Ausmaß eine allfällige Schädigung inzwischen angenommen hat. Zudem kann mittels des jeweils aktuellen Schadenswert $Err_{\Delta\varepsilon}$ ferner auch festgestellt werden, ob die Schädigung der Wandung bereits der für das jeweilige Druckgerät vorab festgelegten kritischen Schädigung der Wandung entspricht, beispielsweise indem der jeweilige Schadenswert $Err_{\Delta\varepsilon}$ mit einem dafür entsprechend vorgegebenen, nämliche kritische Schädigung repräsentierenden Schwellenwert $TH_{\Delta\varepsilon}$ verglichen wird, beispielsweise auch direkt in der Meß- und Auswerteschaltung DSV. Nämlicher Schwellenwert $TH_{\Delta\varepsilon}$ kann beispielsweise vorab mittels eines typ- oder baugleichen anderen Druckgerät, das aber bereits eine als kritische Schädigung einzustufende Schädigung aufweist, ermittelt werden, indem mittels dessen Meß- und Auswerteschaltung wenigstens ein dessen Schädigung repräsentierender Schadenswert $Err_{\Delta\varepsilon}$ ermittelt, insb. auch abgespeichert, wird, und hernach als Schwellenwert $TH_{\Delta\varepsilon}$ in der Meß- und Auswerteschaltung DSV des zu überwachenden Druckgeräts entsprechend hinterlegt wird, beispielsweise auch im erwähnten nicht-flüchtigen Speicher EEPROM. Sofern ein Über- bzw. Unterschreiten des Schwellenwerts $TH_{\Delta\varepsilon}$ durch den Schadenswert $Err_{\Delta\varepsilon}$ erkannt wird, kann dies ferner entsprechend, nämlich beispielsweise inform der erwähnten Warnmeldung $X_{fail}$ signalisiert werden.

Die vorgenannten, insb. auch die dem Erzeugen des Schadenswerts $Err_{\Delta\varepsilon}$ und/oder des Alarms $X_{fail}$ bzw. anderer der vorgenannten Meßwerte jeweils dienenden, Rechenfunktionen können z.B. mittels des oben erwähnten Mikrocomputers der Meß- und Auswerte-Schaltung DSV oder beispielsweise auch einem darin entsprechend vorgesehenen digitalen Signalprozessors DSP sehr einfach realisiert sein. Das Erstellen und Implementieren von entsprechenden Algorithmen, die mit den vorbeschriebenen Formeln korrespondierenden, sowie deren Übersetzung in der Umformer-Elektronik UE entsprechend ausführbare Programm-Codes ist dem Fachmann an und für sich geläufig und bedarf daher - jedenfalls in Kenntnis der vorliegenden Erfindung - keiner detailierteren Erläuterung. Selbstverständlich können vorgenannte Formeln bzw. andere mit der Umformer-Elektronik UE realisierte Funktionalitäten des Meßsystems bzw. des damit gebildeten Druckgeräts auch ohne weiteres ganz oder teilweise mittels entsprechender diskret aufgebauter und/oder hybriden, also gemischt analog-digitalen, Rechenschaltungen in der Umformer-Elektronik UE realisiert werden.

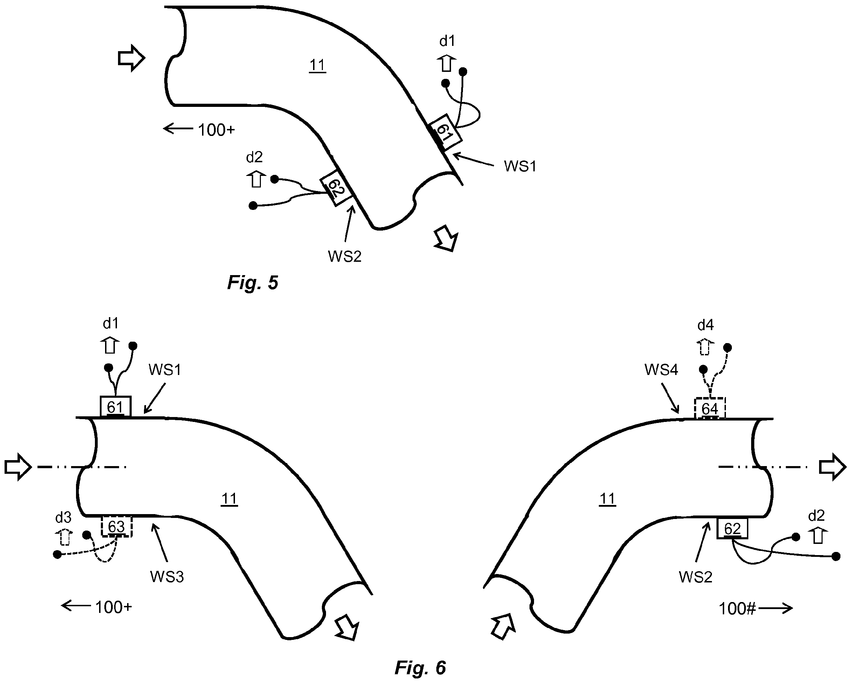

Grundsätzlich gibt es bei Druckgeräten der in Rede stehenden Art eine Vielzahl von Möglichkeiten, voneinander beabstandete Wandsegmente als Wandsegement WS1 bzw. Wandsegemente WS2, mithin als Ort für eine Plazierung des Dehnungssensors 61 bzw. des Dehnungssensors 62 auszuwählen. Für die Überwachung des jeweiligen Druckgeräts sind, wie bereits erwähnt, beispielsweise solche Wandsegmente sehr gut geeignet, die auf für das jeweilige Druckgerät typische Belastungsszenarien regelmäßig mit voneinander abweichenden lokalen Schädigungen reagieren, beispielsweise derart, daß eines der ausgewählten Wandsegmente innerhalb eines vorgebbaren Beobachtungszeitraums stets schneller geschädigt wird (als das jeweils andere) bzw. zu einem vorgebbaren Beobachtungszeitpunkt stärker geschädigt ist (als das jeweils andere). Voneinander abweichende lokalen Schädigungen von Druckgeräten der in Rede stehenden Art können beispielsweise Schädigungen der jeweiligen Wandsegmente mit voneinander verschiedenen Schadensbildern und/oder voneinander abweichenden Schädigungsgraden sein. Für die Überwachung der Wandung geeignete Wandsegmente sind bei Druckgeräten mit betriebsgemäß von Fluid durchströmtem Lumen solche Wandsegmente, die, wie auch in Fig. 4a schematisiert dargestellt, bezüglich der Strömungsrichtung des Fluids voneinander beabstandet angeordnet sind, beispielsweise derart, daß das Wandsegment WS1 stromaufwärts des Wandsegments WS2 angeordnet ist. Darüberhinaus haben sich, nicht zuletzt für den hier gezeigten Fall, daß das Lumen mittels einer Rohranordnung eines Meßwandlers gebildet ist, auch solche Wandsegmente als für die Ermittlung allfälliger Schädigung geeignet erwiesen, die, wie in Fig. 5 bzw. 6 schematisch angedeutet, unmittelbar an ein bogenförmiges Segment der jeweiligen

Rohranordnung oder einen damit gebildeten Krümmer angrenzen, und/oder die einander gegenüberliegend Seiten ein und desselben (Meß-)rohrs einnehmen. Solche Anordnungen der wenigstens zwei Dehnungssensoren 61, 61 sind nicht zuletzt auch für solche Belastungsszenarien gut geeignet, in denen ein erhöhter Verschleiß der Wandung infolge eines partiellen Abschleifens der Wandung durch eine zumindest gelegentlich im Lumen des Druckgeräts strömende Dispersion und/oder in denen plastische Verformungen der Wandungen zu besorgen sind. So neigen beispielsweise Dispersionen nämlich dazu, eine im jeweiligen Dispersionsmedium mitgeführte disperse Phase, beispielsweise also in einem Gas mitgeführte Feststoffpartikel oder - wie in Fig. 4a schematisch dargestellt - in einer Flüssigkeit mitgeführte Gasblasen, im Verlauf der jeweiligen Strömung gelegentlich innerhalb bestimmter Bereiche verstärkt anzusammeln bzw. die Konzentration partiell zu erhöhen, etwa auch durch Kavitation, Sedimentation oder Ausfällung; dies im besonderen derart, daß, wie auch in Fig. 4a schematisiert dargestellt, mit einer gewissen Regelmäßigkeit eines der Wandsegmente WS1, WS2 der Wandung - in Fig. 4a nämlich das Wandsegment WS1 - vornehmlich vom Dispersionsmedium kontaktiert ist, während das jeweils andere der Wandsegment WS1, WS2 - in Fig. 4a also das Wandsegment WS2 - häufiger bzw. in stärkerem Ausmaß mit der dispersen Phase beaufschlagt ist, mithin im Betrieb stärker geschädigt wird. Dieser Effekt ist im besonderen Maß auch bei in Rohranordnungen mit abschnittsweise gekrümmten Rohren und/oder bei in abrupten Querschnittsveränderungen, beispielsweise inform eines Diffusors, aufweisende Rohranordnungen strömenden Dispersionen zu beobachten.

Wenngleich die Überwachung der Wandung des Druckgeräts durch Erfassen der Dehnung lediglich der beiden Wandsegmente WS1, WS2 bzw. unter Verwendung von lediglich zwei entsprechend plazierten Dehnungssensoren 61, 62 für die meisten Anwendungsfällen mit ausreichender Genauigkeit bzw. Sicherheit realisiert werden kann, kann es gelegentlich von Vorteil bzw. erforderlich sein, beispielsweise um den Grad der jeweiligen Schädigung feiner gestuft detektieren zu können bzw. um einzelne Schadensbilder voneinander separiert erfassen und gesondert bewerten zu können, die Dehnung von drei oder mehr voneinander beabstandeten, z.B. in der in Fig. 6 stellvertretend gezeigten Weise angeordneten bzw. ausgewählten, Wandsegmenten WS1, WS2,WS3, WS4 zu erfassen und entsprechend mittels der jeweiligen Meß- und Auswerteschaltung auszuwerten DSV.

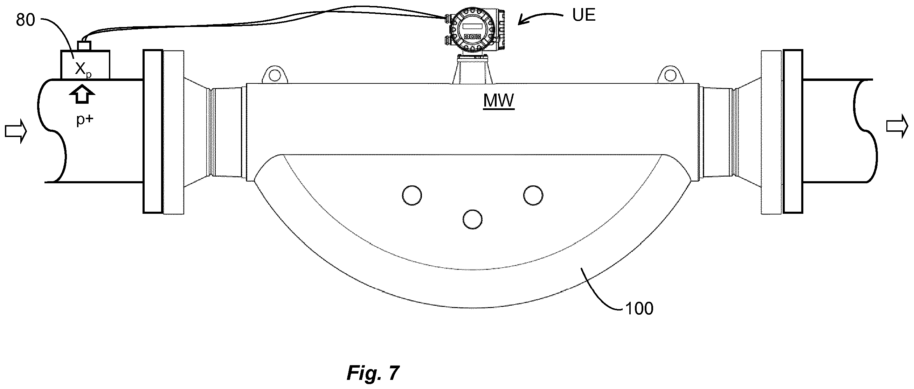

Desweiteren kann es, nicht zuletzt für den Fall, daß die Wandsegmente WS1, WS2 im Betrieb nennenswerten, nämlich die von den jeweiligen Dehnungssensoren gelieferten Dehnungssignale nicht mehr vernachlässigbar beeinflussenden Temperaturen bzw. zeitlichen Änderungen derselben ausgesetzt ist, kann es von Vorteil sein, insb. für den Fall, das die Dehnungssensoren selbst nicht temperaturkompensiert sind, zusätzlich auch eine Temperatur der Wandung, etwa in unmittelbarer Nähe eines der Wandsegmente WS1, WS2, zu erfassen, beispielsweise mittels eines ein einer dem Lumen abgewandten Seite der Wandung W aufgeklebten Platin-Widerstand und/oder Thermoelement aufweisenden und ein entsprechendes Temperatursignal t1 an die Meß- und Auswerteschaltung DSV liefernden Temperatursensors 70, und die Schädigung der Wandung auch unter Verwendung des Temperatursignals t1 zu ermitteln, beispielsweise indem die Meß- und Auswerteschaltung DSV allfällige Temperaturabhängigkeiten der Dehnungssignale d1, d2 basierend auf dem Temperatursignal t1 kompensiert. Darüberhinaus kann es von Vorteil sein, wenn - alternativ oder in Ergänzung zur vorbezeichneten Temperaturkompensation - zwecks der Ermittlung der Schädigung der Wandung zusätzlich auch ein innerhalb des Lumens herrschenden statischen Innendrucks, beispielsweise absolut oder relativ zum Umgebungsdruck, erfaßt wird, beispielsweise wie in Fig. 7 schematisch dargestellt, mittels eines stromaufwärts der Wandsegmente WS1, WS2 in die Wandung eingelassenen und via Kommunikationsschaltung COM oder beispielsweise auch über eine HART-Multidrop mit der Meß- und Auswerteschaltung DSV kommunizierenden (Absolut- bzw. Relativ-) Drucksensors, und in der Meß- und Auswerteschaltung DSV inform eines nämlichen Druck repräsentierenden Druck-Meßwerts $X_p$ zur Verfügung gestellt wird. Unter Verwendung des Druck-Meßwerts kann zudem beispielsweise der oben erwähnte Referenzwert $Ref_{\Delta\varepsilon}$ berechnet werden, beispielsweise gemäß einer auch durch einen zwischen der initialen Dehnungsdifferenz und einem währenddessen gemessenen statischen Innendruck $X_{p,0}$ vermittelnden Proportionalitätsfaktor $K_p$ mitbestimmte Berechnungsvorschrift $Ref_{\Delta\varepsilon} = X_p \cdot K_p$ bzw. $Ref_{\Delta\varepsilon} = X_p A\varepsilon_0 / X_{p,0}$, bzw. kann der oben erwähnten Schadenswert $Err_{\Delta\varepsilon}$ druckkompensiert, nämlich weitge-

hend unabhängig vom momentanen statischen Innendruck bzw. von der dadurch eingestellten Druckdifferenz ermittelt werden. Für den erwähnten Fall, daß das Druckgerät mittels eines In-Line-Meßgeräts für die Messung einer Massen- bzw. Volumendurchflußrate gebildet ist, kann der erwähnte Druck-Meßwert $X_p$ auch auf einen auf das erste bzw. zweite Wandsegment wirkenden Druck umgerechnet werden, beispielsweise basierend auf dem in der eingangs erwähnten US-A 2011/0161018 gezeigten Meßverfahren.

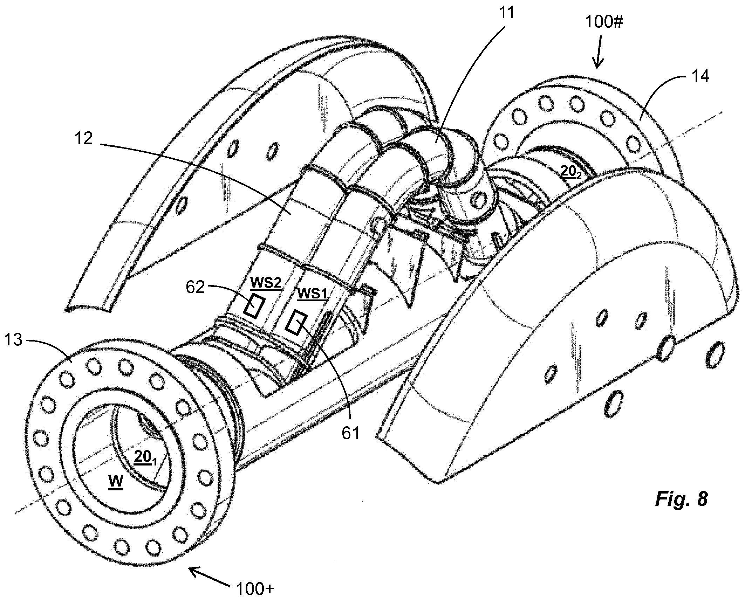

Ein weiteres Ausführungsbeispiel eines Druckgeräts ist in Fig. 8 dargestellt. Bei der hier gezeigten Variante ist das Fluid führende Lumen des, wiederum mittels eines Meßwandlers vom Vibrationstyp gebildeten, Druckgeräts dadurch gebildet, daß die Rohranordnung zusätzlich zum (ersten) Rohr 11 wenigstens ein weiteres (zweites) Rohr 12 aufweist, und daß jedes der wenigstens zwei Rohre 11, 12 unter Bildung von zumindest zwei strömungstechnisch parallel geschalteten Strömungspfaden jeweils mit einem dem Aufteilen von einströmendem Fluid in zwei Teilströmungen dienenden einlaßseitigen ersten Strömungsteiler $20_1$ sowie einen dem Wiederzusammenführen der Teilströmungen dienenden auslaßseitigen zweiten Strömungsteiler $20_2$ zusammengeschlossen ist. Jeder der beiden Strömungsteiler $20_1$, $20_2$ weist dafür jeweils eine erste Strömungsöffnung, in die das erste der wenigstens zwei (Meß-) Rohre jeweils mündet sowie jeweils eine zweite Strömungsöffnung, in die das zweite der wenigstens zwei (Meß-) Rohre jeweils mündet, auf.

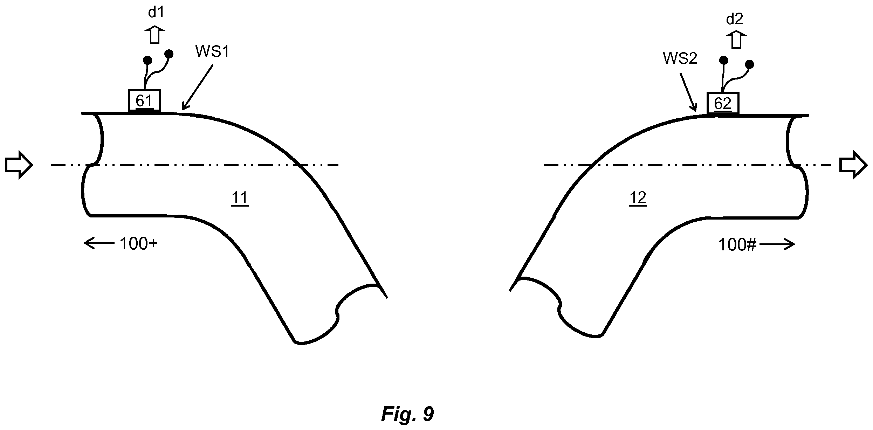

Erfindungsgemäß werden die beiden Dehnungssensoren 61,62 so an der Wandung plaziert, daß - wie in Fig. 9 schematisiert dargestellt - dasWandsegment WS1 gleichweit vom Einlaßende 100+ entfernt ist, wie das Wandsegment WS2 vom Auslaßende 100#.

Es sei an dieser Stelle ergänzend noch erwähnt, daß - wenngleich im in Fig. 8 gezeigten Ausführungsbeispiel der Meßwandler bzw. das damit gebildete Druckgerät zwei gekrümmte Rohre aufweist, mithin in seinem mechanischen Aufbau im wesentlichen dem in den US-A 2005/0072238 oder US-A 57 96 011 vorgeschlagenen bzw. auch den seitens der Anmelderin unter der Typbezeichnung "PROMASS E" oder "PROMASS F" käuflich angebotenen Meßwandlern entspricht - die die Erfindung auch entsprechend auf mit geraden und/oder mehr als zwei (Meß-) Rohren, beispielsweise also vier parallelen Rohren, gebildeten Druckgeräten, etwa vergleichbar den in den eingangs erwähnten US-A 2011/0265580, US-A 56 02 345 oder WO-A 96/08697 gezeigten oder auch den seitens der Anmelderin unter der Typbezeichnung "PROMASS M" oder "PROMASS X" käuflich angebotenen Meßwandlern, Anwendung finden kann.

## Patentansprüche

1. Meßsystem zum Ermitteln von wenigstens eine, insb. fluiddynamische und/oder thermodynamische, Meßgröße, insb. eine Volumendurchflußrate, eine Massendurchflußrate, einen Dichte, eine Viskosität, einen Druck oder eine Temperatur, eines Fluids, insb. eines Gases, einer Flüssigkeit oder einer fließfähigen Dispersion, repräsentierenden Meßwerten, welches Meßsystem umfaßt:

- ein, insb. wieder lösbar mit einer Rohrleitung montierbares, von einer, insb. metallischen, Wandung umhülltes Lumen aufweisendes Druckgerät, nämlich ein Gerät zum Führen und/oder Vorhalten des, insb. nominell mit einem Druck von mehr als 0,5 bar auf die Wandung einwirkenden, Fluids in nämlichem Lumen;
- einen an einem, insb. metallischen, ersten Wandsegment der Wandung fixierten, insb. mittels eines Dehnmeßstreifen gebildeten, ersten Dehnungssensor zum Erzeugen eines von einer zeitlich veränderlichen Dehnung des ersten Wandsegments abhängigen ersten Dehnungssignals, insb. mit einer von nämlicher Dehnung abhängigen elektrischen Spannung und/oder einem von nämlicher Dehnung abhängigen elektrischen Strom,
- wenigstens einen an einem vom ersten Wandsegment beabstandeten, im Vergleich zum ersten Wandsegment schneller verschleißenden und/oder stärker verschlissenen, insb. metallischen, zweiten Wandsegment der Wandung fixierten, insb. mittels eines Dehnmeßstreifen gebildeten und/oder zum ersten Dehnungssensor baugleichen, zweiten Dehnungssensor zum Erzeugen eines von einer zeitlich veränderlichen Dehnung des zweiten Wandsegments abhängigen zweiten Dehnungssignals, insb. mit einer von nämlicher Dehnung abhängigen elektrischen Spannung und/oder einem von nämlicher Dehnung abhängigen elektrischen Strom;
- sowie eine sowohl mit dem ersten Dehnungssensor als auch dem zweiten Dehnungssensor elektrisch gekoppelte Umformer-Elektronik, die dafür eingerichtet ist,

-- sowohl das erste Dehnungssignal als auch das zweite Dehnungssignal zu empfangen,
-- sowie unter Verwendung sowohl des ersten als auch des zweiten Dehnungssignals eine, insb. eine Druckfestigkeit des Druckgeräts verringernde und/oder eine Restlebensdauer des Druckgeräts mitbestimmende und/oder aus einer plastischen Verformung der Wandung resultierenden und/oder aus einem Verschleißes der Wandung resultierenden, Schädigung der Wandung zu ermitteln, insb. nämlich einen einen Kennzahlwert für eine die Schädigung der Wandung quantifizierende Schadenskennzahl repräsentierenden Schadenswert (Err$_{\Delta\varepsilon}$) zu ermitteln, nämlich unter Verwendung sowohl des ersten Dehnungssignals als auch des zweiten Dehnungssignals einen einen Unterschied zwischen der Dehnung des ersten Wandsegments und der Dehnung des zweiten Wandsegments repräsentierenden Dehnungsabweichungswert zu generieren sowie die Schädigung der Wandung unter Verwendung des Dehnungsabweichungswerts (X$_{\Delta\varepsilon}$) zu ermitteln;

- wobei das Druckgerät einen Meßwandler vom Vibrationstyp mit einer mittels wenigstens eines, insb. zumindest abschnittsweise gekrümmten, Rohrs gebildeten Rohranordnung zum Führen des Fluids aufweist, der dafür eingerichtet ist, wenigstens ein mit nämlicher Meßgröße korrespondierendes, insb. elektrisches, Meßsignal zu liefern,

- wobei das Lumen des Druckgeräts mittels der Rohranordnung gebildet ist,

- und wobei die Rohranordnung dafür eingerichtet ist, von Fluid durchströmt zu werden, derart, daß das erste Wandsegment bezüglich einer Strömungsrichtung des Fluids vom zweiten Wandsegment beabstandet ist,

- wobei das Lumen des Druckgeräts mittels der Rohranordnung gebildet ist und sich von einem Einlaßende (100+) bis zu einem Auslaßende (100#) erstreckt,

- wobei die Rohranordnung sowohl das erste Wandsegment als auch das zweite Wandsegment inkludiert,

- und wobei das Wandsegment (WS1) gleichweit vom Einlaßende (100+) entfernt ist, wie das zweite Wandsegment (WS2) vom Auslaßende (100#).

2. Meßsystem nach dem vorherigen Anspruch ,

- wobei die Umformer-Elektronik dafür eingerichtet ist, zum Generieren des Dehnungsabweichungswerts (X$_{\Delta\varepsilon}$) sowohl für einen das erste Dehnungssignal als auch für einen das zweite Dehnungssignal charakterisierenden Signalparameter, insb. einen Momentanwert, einen Lageparameter und/oder einen Streuungsparameter, wiederkehrend jeweils einen nämlichen Signalparameter quantifizierenden Parametermeßwert zu ermitteln, insb. derart, daß die die Umformer-Elektronik mittels wenigstens eines vom ersten Dehnungssignal sowie wenigstens eines vom zweiten Dehnungssignal abgeleiteten Parametermeßwerts eine Differenz und/oder einen Quotienten bildet; und/oder

- wobei die Umformer-Elektronik dafür eingerichtet ist, basierend auf sowohl dem ersten als auch dem zweiten Dehnungssignal - insb. unter Verwendung eines basierend auf dem ersten Dehnungssignal und dem zweiten Dehnungssignal ermittelten, eine Abweichung zwischen der Dehnung des ersten Wandsegments und des zweiten Wandsegments repräsentierenden Dehnungsabweichungswert (X$_{\Delta\varepsilon}$) - eine nämliche Schädigung, insb. visuell und/oder akustisch wahrnehmbar, signalisierende Warnmeldung zu generieren, insb. nämlich die Warnmeldung zu generieren, falls ein basierend auf dem ersten und zweiten Dehnungssignal ermittelter Schadenswert (Err$_{\Delta\varepsilon}$) einen dafür eine für das Druckgerät vorab festgelegte kritische Schädigung der Wandung repräsentierenden vorgegebenen Schwellenwert (TH$_{\Delta\varepsilon}$) übersteigt; und/oder

- wobei die Umformer-Elektronik dafür eingerichtet ist, basierend auf dem ersten und zweiten Dehnungssignal - insb. unter Verwendung eines basierend auf dem ersten Dehnungssignal und dem zweiten Dehnungssignal ermittelten, eine Abweichung zwischen der Dehnung des ersten Wandsegments und des zweiten Wandsegments repräsentierenden Dehnungsabweichungswerts (X$_{\Delta\varepsilon}$) - einen Schadenswert (Err$_{\Delta\varepsilon}$), nämlich einen Kennzahlwert für eine eine momentane Schädigung der Wandung quantifizierende Schadenskennzahl zu ermitteln, welcher Schadenswert (Err$_{\Delta\varepsilon}$) eine, insb. relative oder absolute, Abweichung des Dehnungsabweichungswerts (X$_{\Delta\varepsilon}$) von einem dafür, insb. vorab an nämlichem Druckgerät mit unversehrter Wandung oder vorab an einem baugleichen anderen Druckgerät, ermittelten Referenzwert (Ref$_{\Delta\varepsilon}$) repräsentiert, insb. derart, daß der Schadenswert (Err$_{\Delta\varepsilon}$) eine Bedingung

$$Err_{\Delta\varepsilon} = 1 - \frac{X_{\Delta\varepsilon}}{Ref_{\Delta\varepsilon}}$$

Err$_{\Delta\varepsilon}$ oder eine Bedingung Err$_{\Delta\varepsilon}$ = Ref$_{\Delta\varepsilon}$ - X$_{\Delta\varepsilon}$ erfüllt.

3. Meßsystem nach einem der vorherigen Ansprüche, wobei das erste Wandsegment bezüglich der Strömungsrichtung des Fluids stromaufwärts des zweiten Wandsegments angeordnet ist.

4. Meßsystem gemäß einem der vorherigen Ansprüche, wobei die Rohranordnung des Meßwandlers wenigstens zwei, insb. strömungstechnisch parallele Strömungspfade der Rohranordnung bildende und/oder vier und/oder baugleiche, Rohre aufweist.

**5.** Meßsystem gemäß dem vorherigen Anspruch,

- wobei der erste Dehnungsensor an einem der Rohre fixiert ist; und/oder
- wobei der zweite Dehnungsensor an einem der Rohre fixiert ist.

**6.** Meßsystem gemäß dem vorherigen Anspruch, wobei sowohl der erste Dehnungsensor als auch der zweite Dehnungsensor an einem der Rohre fixiert ist, derart, daß der zweite Dehnungsensor nicht an demselben Rohr wie der erste Dehnungsensor fixiert ist.

**7.** Meßsystem nach einem der vorherigen Ansprüche,

- wobei die Umformer-Elektronik mit dem Meßwandler elektrisch gekoppelt ist,
- und wobei die Umformer-Elektronik dafür eingerichtet ist,

-- das wenigstens eine Meßsignal zu empfangen sowie unter Verwendung nämlichen Meßsignals einen Meßwert zu ermitteln, der eine physikalische, insb. fluiddynamische und/oder thermodynamische, Meßgröße, insb. eine Volumendurchflußrate, eine Massendurchflußrate, eine Dichte, eine Viskosität, einen Druck oder eine Temperatur, des Fluids repräsentiert, und/oder
-- wenigstens ein den Meßwandler ansteuerndes, insb. im Meßwandler einen mit der wenigstens einen Meßgröße korrespondierenden Meßeffekt induzierendes, elektrisches Treibersignal zu liefern.

**8.** Meßsystem einem der vorherigen Ansprüche,

- wobei das Druckgerät ein Coriolis-Massendurchfluß-Meßgerät ist,
- und wobei der Meßwandler wenigstens zwei voneinander beabstandete Schwingungssensoren zum Erzeugen von zwei Schwingungssignalen (s1, s2) mit jeweils einem von der Massendurchflußrate abhängigen Phasenwinkel aufweist.

**9.** Meßsystem nach einem der vorherigen Ansprüche, wobei einlaßseitig, nämlich im Bereich des Einlaßendes (100+) des Druckgeräts ein erster Anschlußflansch (13) für den Anschluß an ein Fluid zuführendes Leitungssegment einer Rohrleitung und auslaßseitig, nämlich im Bereich des Auslaßendes (100#) des Druckgeräts ein zweiter Anschlußflansch (14) für ein Fluid wieder abführendes Leitungssegment der Rohrleitung vorgesehen ist.

**10.** Meßsystem nach einem der vorherigen Ansprüche,

wobei das Druckgerät ein im Bereich sowohl des Einlaßendes (100+) als auch des Auslaßendes (100#) mit der Rohranordnung mechanisch gekoppeltes Meßwandler-Gehäuse (100) aufweist.

**11.** Meßsystem nach Anspruch 9 und 10, wobei die Anschlußflansche (13, 14) endseitig in das Meßwandler-Gehäuse (100) integriert sind.

**12.** Verfahren zur Überwachung und/oder Überprüfung eines ein von einer, insb. metallischen, Wandung (W) umhülltes Lumen aufweisenden, insb. wieder lösbar mit einer Rohrleitung montierbares, Meßsystems gemäß einem der vorherigen Ansprüche, welches Verfahren folgende Schritte umfaßt:

- Erfassen sowohl einer, insb. zeitlich veränderlichen und/oder von einem innerhalb des Lumens herrschenden statischen Innendrucks abhängigen, Dehnung, $\varepsilon_1$, des ersten Wandsegments (WS1) der Wandung als auch einer, insb. zeitlich veränderlichen und/oder von einem innerhalb des Lumens herrschenden statischen Innendrucks abhängigen, Dehnung, $\varepsilon_2$, zumindest des zweiten Wandsegments (WS2) der Wandung (W) zum Ermitteln eines einen Unterschied zwischen der Dehnung des ersten Wandsegments und der Dehnung des zweiten Wandsegments, repräsentierenden Dehnungsabweichungswerts ($X_{\Delta\varepsilon}$);
- sowie Verwenden des Dehnungsabweichungswerts ($X_{\Delta\varepsilon}$) zum Ermitteln einer Schädigung der Wandung, insb. infolge einer plastischen Verformung der Wandung und/oder infolge eines Verschleißes der Wandung.

**13.** Verfahren nach dem vorherigen Anspruch, weiters umfassend:

- Erzeugen eines von einer zeitlich veränderlichen Dehnung des ersten Wandsegments abhängigen ersten Dehnungssignals, insb. mit einer von nämlicher Dehnung abhängigen elektrischen Spannung und/oder einem von nämlicher Dehnung abhängigen elektrischen Strom, sowie
- Erzeugen eines von einer zeitlich veränderlichen Dehnung des zweiten Wandsegments abhängigen zweiten Dehnungssignals, insb. mit einer von nämlicher Dehnung abhängigen elektrischen Spannung und/oder einem von nämlicher Dehnung abhängigen elektrischen Strom.

**14.** Verfahren nach dem vorherigen Anspruch, weiters umfassend:

- Verwenden des am ersten Wandsegement fixierten Dehnungsmeßstreifen zum Erzeugen des ersten Dehnungssignals sowie des am zweiten Wandsegment fixierten Dehnungsmeßstreifen zum Erzeugen des zweiten Dehnungssignals; und/oder

- Verwenden sowohl des ersten Dehnungssignals als auch des zweiten Dehnungssignals zum Ermitteln des Dehnungsabweichungswerts $(X_{\Delta\varepsilon})$.

15. Verfahren nach einem der vorherigen Ansprüche, wobei der Schritt des Ermittelns der Schädigung der Wandung einen Schritt des Verwendens des Dehnungsabweichungswerts $(X_{\Delta\varepsilon})$ zum Ermitteln einer Abweichung der Dehnungsdifferenz von einer vorab, insb. für nämliches Druckgerät mit unversehrter Wandung oder für ein baugleiches anderes Druckgerät, ermittelten initialen Dehnungsdifferenz umfaßt.

16. Verfahren nach dem vorherigen Anspruch , wobei der Schritt des Ermittelns des Dehnungsabweichungswerts $(X_{\Delta\varepsilon})$ einen Schritt des Verwendens sowohl des ersten Dehnungssignals als auch des zweiten Dehnungssignals umfaßt, insb. derart, daß sowohl vom ersten Dehnungssignal als auch vom zweiten Dehnungssignal jeweils wenigstens ein Signalparameter abgeleitet wird.

17. Verfahren nach dem vorherigen Anspruch, wobei zum Ermitteln des Dehnungsabweichungswerts $(X_{\Delta\varepsilon})$ sowohl vom ersten Dehnungssignal als auch vom zweiten Dehnungssignal jeweils wenigstens ein Parametermeßwert für einen das jeweilige Dehnungssignal charakterisierenden Signalparameter, insb. ein Momentanwert eines jeden der beiden Dehnungssignale und/oder ein Lageparameter eines jeden der beiden Dehnungssignale und/oder ein Streuungsparameter eines jeden der beiden Dehnungssignale, sowie eine Differenz zwischen dem vom ersten Dehnungssignal abgeleiteten Signalparameter und dem vom zweiten Dehnungssignal abgeleiteten Signalparameter und/oder ein Quotient zwischen dem vom ersten Dehnungssignal abgeleiteten Signalparameter und dem vom zweiten Dehnungssignal abgeleiteten Signalparameter ermittelt werden.

18. Verfahren nach einem der Ansprüche 12 bis 17, weiters umfassend:

- einen Schritt des Generierens einer Warnmeldung, die eine, insb. einer für das Druckgerät vorab festgelegten maximal zulässigen Schädigung der Wandung entsprechende und/oder eine Inspektion des Druckgeräts bedingende, kritische Schädigung der Wandung, insb. visuell und/oder akustisch wahrnehmbar, signalisiert, insb. derart, daß ein unter Verwendung des Dehnungsabweichungswerts $(X_{\Delta\varepsilon})$ ermittelter Schadenswert $(Err_{\Delta\varepsilon})$ mit einem dafür vorgegebenen, eine für das Druckgerät vorab festgelegte kritische Schädigung der Wandung repräsentierenden Schwellenwert $(TH_{\Delta\varepsilon})$ verglichen wird; und/oder

- einen Schritt des Einströmenlassens von Fluid in das Lumen des Druckgeräts, insb. zum Erhöhen eines innerhalb des Lumens herrschenden statischen Innendrucks auf einen im Vergleich zum Umgebungsdruck höheren Druckwert.; und/oder

- einen Schritt des Auströmenlassens von Fluid aus dem Lumen des Druckgeräts; und/oder

- einen Schritt des Ermittelns eines eine, insb. lokale oder mittlere, Dehnung der Wandung, insb. eine Dehnung genau eines der Wandsegmente, repräsentierenden Dehnungswerts $(X_{\varepsilon 1})$, wobei der Schritt des Ermittelns der Schädigung der Wandung einen Schritt des Verwendens des Dehnungswerts $(X_{\varepsilon 1})$ umfaßt.

19. Verfahren nach einem der Ansprüche 12 bis 18, wobei der Schritt des Ermittelns der Schädigung der Wandung einen Schritt des Verwendens des Dehnungsabweichungswerts $(X_{\Delta\varepsilon})$ zum Ermitteln eines Schadenswerts $(Err_{\Delta\varepsilon})$, nämlich eines Kennzahlwertes für eine nämliche Schädigung der Wandung quantifizierende - insb. eine Abweichung der Dehnungsdifferenz von einem dafür vorab ermittelten Referenzwert $(Ref_{\Delta\varepsilon})$ repräsentierende - Schadenskennzahl, umfaßt.

20. Verfahren nach dem vorherigen Anspruch ,

- wobei der Schritt des Ermittelns der Schädigung der Wandung einen Schritt des Verwendens des Schadenswerts $(Err_{\Delta\varepsilon})$ umfaßt, insb. derart, daß der Schadenswert $(Err_{\Delta\varepsilon})$ mit einem dafür vorgegebenen Schwellenwert $(TH_{\Delta\varepsilon})$ verglichen wird; und/oder

- wobei der Schadenswert $(Err_{\Delta\varepsilon})$ eine, insb. relative oder absolute, Abweichung der Dehnungsdifferenz von einem dafür, insb. vorab an nämlichem Druckgerät mit unversehrter Wandung oder vorab an einem baugleichen anderen Druckgerät, ermittelten Referenzwert $(Ref_{\Delta\varepsilon})$ repräsentiert, insb. derart, daß der Schadenswert $(Err_{\Delta\varepsilon})$

eine Bedingung:

$$Err_{\Delta\varepsilon} = 1 - \frac{X_{\Delta\varepsilon}}{Ref_{\Delta\varepsilon}}$$

oder
eine Bedingung:

$$Err_{\Delta\varepsilon} = Ref_{\Delta\varepsilon} - X_{\Delta\varepsilon}$$

erfüllt.

21. Verfahren nach einem der Ansprüche 12 bis 21, wobei der Schritt des Ermittelns der Schädigung der Wandung einen Schritt des Erfassens eines innerhalb des Lumens herrschenden statischen Innendrucks, insb. relativ zu einem von außen auf die Wandung wirkenden Umgebungsdruck, und/oder einen Schritt des Erfassens einer Temperatur der Wandung, insb. an einer dem Lumen abgewandten Seite der Wandung, umfaßt, insb. derart, daß der Schritt des Ermittelns des Dehnungswerts ($X_{\varepsilon 1}$) einen Schritt des Erfassens der Dehnung zumindest eines der Wandsegmente umfaßt.

22. Verfahren nach einem der vorherigen Ansprüche, weiters umfassend einen Schritt des Veränderns einer zwischen einem innerhalb des Lumens herrschenden statischen Innendruck und einem von außen auf die Wandung wirkenden Umgebungsdruck existierenden Druckdifferenz ($p_{rel}$) zum elastischen Deformieren zumindest von Teilbereichen der Wandung, nämlich zumindest des ersten Wandsegments der Wandung und zumindest des zweiten Wandsegments der Wandung.

23. Verfahren nach dem vorherigen Anspruch,

- wobei der Schritt des Veränderns der Druckdifferenz einen Schritt des Erhöhens des statischen Innendrucks auf einen Druckwert, der, insb. um mehr als 0.5 bar, größer als der Umgebungsdruck ist, umfaßt; und/oder
- wobei der Schritt des Veränderns der Druckdifferenz einen Schritt des Einströmenlassens von Fluid in das Lumen des Druckgeräts umfaßt; und/oder
- wobei der Schritt des Veränderns der Druckdifferenz einen Schritt des Strömenlassens von Fluid durch das Lumen des Druckgeräts umfaßt.

**Claims**

1. Measuring system designed to determine measured values representing at least one measured variable, particularly a fluid-dynamic and/or thermodynamic measured variable - particularly a volume flow rate, a mass flow rate, a density, a viscosity, a pressure or a temperature - of a fluid, particularly a gas, a liquid or a flowing dispersion, said measuring system comprising:

- a pressure device which can be mounted on a pipe, particularly in a detachable manner, and has an interior channel surrounded by a wall, particularly a metal wall, specifically a device designed to conduct and/or hold the fluid in said interior channel, particularly acting nominally on the wall with a pressure of more than 0.5 bar;
- a first strain sensor fixed on a first wall segment, particularly metal, particularly formed by means of a strain gauge, said sensor being designed to generate a first strain signal, which depends on a strain, which varies over time, of the first wall segment, particularly with an electrical voltage that depends on said strain and/or an electrical current that depends on said strain,
- at least a second strain sensor, which is fixed on a second wall segment, which is particularly metal, wherein said second wall segment is spaced away from the first wall segment and wears more and/or is more worn than the first wall segment, and which is particularly formed by means of a strain gauge and/or is identical in design to the first strain sensor, said second sensor being designed to generate a second strain signal which is dependent on a strain, which varies over time, of the second wall segment, particularly with an electrical voltage that depends on said strain and/or an electrical current that depends on said strain;
- as well as a transmitter electronics unit electrically coupled to both the first strain sensor and the second strain sensor, and wherein said electronics unit is designed

-- to receive both the first strain signal and the second strain signal,
-- and particularly to determine - using both the first and the second strain signal, to determine damage to the wall, particularly damage which reduces the compressive strength of the pressure device and/or which codetermines a remaining life of the pressure device and/or which results from a plastic deformation of the wall and/or which results from wear of the wall - a damage value ($Err_{\Delta\varepsilon}$) which represents an index value for a damage index quantifying the damage to the wall, specifically to generate a strain deviation value representing a difference between the strain of the first wall segment and the strain of the second wall segment using both the first strain signal and the second strain signal, and to determine the damage to the wall using the strain deviation value ($X_{\Delta\varepsilon}$);

- wherein the pressure device features a vibronic-type transducer with a pipe arrangement formed by at least one pipe, particularly at least partially curved, and designed to conduct the fluid, wherein said transducer is designed to deliver at least a measuring signal, particularly an electrical signal, that corresponds to said measured variable,

- wherein the interior channel of the pressure device is formed by the pipe arrangement,

- and wherein the pipe arrangement is designed to have fluid flow through it in such a way that the first wall segment is spaced at a distance from the second wall segment in relation to a flow direction of the fluid,

- wherein the interior channel of the pressure device is formed by means of the pipe arrangement and extends from an inlet end (100+) to an outlet end (100#),

- wherein the pipe arrangement includes both the first wall segment and the second wall segment,

- and wherein the wall segment (WS1) is at the same distance from the inlet end (100+) as the second wall segment (WS2) is from the outlet end (100#).

2. Measuring system as claimed in the previous claim,

- wherein, for the purpose of generating the strain deviation value ($X_{\Delta\varepsilon}$), the transmitter electronics unit is designed to recurrently determine a parameter measured value quantifying the signal parameter - both for a signal parameter that characterizes the first strain signal and for a signal parameter that characterizes the second strain signal - particularly an instantaneous value, a position parameter and/or a distribution parameter, particularly in such a way that the transmitter electronics unit forms a difference and/or a quotient using at least one parameter measured value derived from the first strain signal and at least one parameter measured value derived from the second strain signal; and/or

- wherein the transmitter electronics unit is designed to generate, on the basis of both the first and the second strain signal - particularly using a strain deviation value ($X_{\Delta\varepsilon}$) determined on the basis of the first strain signal and the second strain signal and representing a deviation between the strain of the first wall segment and the second wall segment - a warning message signaling the damage in question, particularly in a visually and/or acoustically perceivable manner, particularly to generate the warning message if a damage value ($Err_{\Delta\varepsilon}$) determined on the basis of the first and the second strain signal exceeds a predefined threshold value ($TH_{\Delta\varepsilon}$) representing critical damage to the wall defined in advance for the pressure device; and/or

- wherein the transmitter electronics unit is designed to determine - on the basis of the first and the second strain signal, particularly using a strain deviation value ($X_{\Delta\varepsilon}$) that is determined on the basis of the first strain signal and the second strain signal and which represents a deviation between the strain of the first wall segment and the second wall segment - a damage value ($Err_{\Delta\varepsilon}$), i.e. an index value for a damage index quantifying a current damage to the wall, said damage value ($Err_{\Delta\varepsilon}$) representing a deviation, particularly relative or absolute, of the strain deviation value ($X_{\Delta\varepsilon}$) from a reference value ($Ref_{\Delta\varepsilon}$) determined for this purpose, particularly determined in advance on said pressure device with an intact wall or determined in advance on another pressure device with an identical design, particularly in such a way that the damage value ($Err_{\Delta\varepsilon}$) meets a condition

$$Err_{\Delta\varepsilon} = 1 - \frac{X_{\Delta\varepsilon}}{Ref_{\Delta\varepsilon}}$$ or a condition $Err_{\Delta\varepsilon} = Ref_{\Delta\varepsilon} - X_{\Delta\varepsilon}$.

3. Measuring system as claimed in one of the previous claims, wherein the first wall segment is arranged upstream from the second wall segment in relation to the flow direction of the fluid.

4. Measuring system as claimed in one of the previous claims, wherein the pipe arrangement of the transducer comprises at least two pipes, particularly forming flow paths of the pipe arrangement that are parallel in terms of flow, and/or four pipes and/or pipes with an identical design.

5. Measuring system as claimed in the previous claim,

- wherein the first strain sensor is fixed on one of the pipes; and/or
- wherein the second strain sensor is fixed on one of the pipes.

6. Measuring system as claimed in the previous claim, wherein both the first strain sensor and the second strain sensor are fixed on one of the pipes in such a way that the second strain sensor is not fixed on the same pipe as the first strain sensor.

7. Measuring system as claimed in one of the previous claims,

- wherein the transmitter electronics unit is electrically coupled to the transducer,
- and wherein the transmitter electronics unit is designed to

-- receive the at least one measuring signal, and, using said measuring signal, to determine a measured value that represents a physical measured variable, particularly a fluid-dynamic and/or thermodynamic measured variable, particularly a volume flow rate, a mass flow rate, a density, a viscosity, a pressure or a temperature of the fluid, and/or

-- deliver an electrical driver signal, which controls the transducer, particularly inducing in the transducer a measuring effect that corresponds to the at least one measured variable.

8. Measuring system as claimed in one of the previous claims,

- wherein the pressure device is a Coriolis mass flowmeter,
- and wherein the transducer has at least two vibration sensors that are spaced away from one another and designed to generate two vibration signals (s1, s2) with a phase angle that depends on the mass flow rate.

9. Measuring system as claimed in one of the previous claims, wherein a first connection flange (13) is provided on the inlet side, particularly in the area of the inlet end (100+) of the pressure device, for the purpose of connecting to a pipe segment of the pipe supplying fluid and wherein a second connection flange (14) is provided on the outlet side, particularly in the area of the outlet end (100#) of the pressure device for the purpose of connecting to a pipe segment of the pipe taking away fluid.

10. Measuring system as claimed in one of the previous claims, wherein the pressure device has a transducer housing (100) mechanically coupled to the pipe arrangement both in the area of the inlet end (100+) and in the area of the outlet end (100#).

11. Measuring system as claimed in Claim 9 and 10, wherein the connection flanges (13, 14) are integrated into the transducer housing (100) at their ends.

12. Method to monitor and/or check a measuring system as claimed in one of the previous claims having an interior channel surrounded by a wall (W), particularly metal, wherein said measuring system can be mounted with a pipe, particularly in a detachable manner, said method comprising the following steps:

- Measurement of both a strain, $\varepsilon_1$, of the first wall segment (WS1), which particularly varies over time and/or depends on a static internal pressure inside the interior channel, and a strain, $\varepsilon_2$, at least of the second wall segment (WS2), which particularly varies over time and/or depends on a static internal pressure inside the interior channel, for the purpose of determining a strain deviation value ($X_{\Delta\varepsilon}$) representing a difference between the strain of the first wall segment and the strain of the second wall segment; and

- Use of the strain deviation value ($X_{\Delta\varepsilon}$) to determine damage to the wall, particularly as a result of a plastic deformation of the wall and/or as a result of wear of the wall.

13. Method as claimed in the previous claim, further comprising:

- Generation of a first strain signal which is dependent on a strain, which is variable over time, of the first wall segment, particularly with an electrical voltage that depends on said strain and/or an electrical current that depends on said strain, and
- Generation of a second strain signal which is dependent on a strain, which is variable over time, of the second wall segment, particularly with an electrical voltage that depends on said strain and/or an electrical current that depends on said strain.

14. Method as claimed in the previous claim, further comprising:

- Use of the strain gauge fixed on the first wall segment to generate the first strain signal and of the strain gauge fixed on the second wall segment to generate the second strain signal; and/or
- Use of both the first strain signal and the second strain signal to determine the strain deviation value ($X_{\Delta\varepsilon}$).

15. Method as claimed in one of the previous claims, wherein the step involving the determination of the damage to the wall comprises a step involving the use of the strain deviation value ($X_{\Delta\varepsilon}$) to determine a deviation of the strain difference from an initial strain difference determined in advance, particularly for the pressure device with an intact wall or for another pressure device that is identical in design.

16. Method as claimed in the previous claim, wherein the step involving the determination of the strain deviation value ($X_{\Delta\varepsilon}$) comprises a step involving the use of both the first strain signal and the second strain signal, particularly in such a way that at least one signal parameter is derived from both the first strain signal and the second strain signal.

**17.** Method as claimed in the previous claim, wherein, in order to determine the deviation strain value ($X_{\Delta\varepsilon}$), at least one parameter measured value is determined, from both the first strain signal and the second strain signal, for a signal parameter characterizing the respective strain signal, particularly an instantaneous value of each of the two strain signals and/or a position parameter of each of the two strain signals and/or a distribution parameter of each of the two strain signals, as well as a difference between the signal parameter derived from the first strain signal and the signal parameter derived from the second strain signal and/or a quotient between the signal parameter derived from the first strain signal and the signal parameter derived from the second strain signal.

**18.** Method as claimed in one of the Claims 12 to 17, further comprising:

- a step involving the generation of a warning message that signals, particularly in a visually or acoustically perceivable manner, critical damage to the wall corresponding particularly to maximum permissible wall damage defined in advance for the pressure device and/or the need for an inspection of the pressure device, particularly in such a way that a damage value ($Err_{\Delta\varepsilon}$)
- determined using the deviation strain value ($X_{\Delta\varepsilon}$) - is compared to a threshold value ($TH_{\Delta\varepsilon}$) predetermined for this purpose and representing critical damage to the wall predefined for the pressure device; and/or
- a step wherein fluid is allowed to flow into the interior channel of the pressure device, particularly to increase a static internal pressure present in the interior channel to a pressure value that is higher compared to the ambient pressure; and/or
- a step wherein fluid is allowed to flow out of the interior channel of the pressure device; and/or
- a step to determine a strain value ($X_{\varepsilon 1}$) representing a strain, particularly local or average, of the wall, particularly a strain of precisely one of the wall segments, wherein the step to determine the damage to the wall comprises a step to use the strain value ($X_{\varepsilon 1}$).

**19.** Method as claimed in one of the Claims 12 to 18, wherein the step to determine the damage to the wall comprises a step involving the use of the deviation strain value ($X_{\Delta\varepsilon}$) for the purpose of determining a damage value ($Err_{\Delta\varepsilon}$), i.e. an index value quantifying said damage to the wall - particularly representing a deviation of the strain difference from a reference value ($Ref_{\Delta\varepsilon}$) determined in advance for this purpose.

**20.** Method as claimed in the previous claim,

- wherein the step involving the determination of the damage to the wall comprises a step involving the use of the damage value ($Err_{\Delta\varepsilon}$), particularly in such a way that the damage value ($Err_{\Delta\varepsilon}$) is compared to a threshold value ($TH_{\Delta\varepsilon}$) predefined for this purpose; and/or
- wherein the damage value ($Err_{\Delta\varepsilon}$) represents a deviation of the strain difference, particularly relative or absolute, from a reference value ($Ref_{\Delta\varepsilon}$) determined for this purpose, particularly in advance on the pressure device having an intact wall or in advance on another pressure device with an identical design, particularly in such a way that the damage value ($Err_{\Delta\varepsilon}$) meets

a condition :

$$Err_{\Delta\varepsilon} = 1 - \frac{X_{\Delta\varepsilon}}{Ref_{\Delta\varepsilon}}$$

or
a condition:

$$Err_{\Delta\varepsilon} = Ref_{\Delta\varepsilon} - X_{\Delta\varepsilon}.$$

**21.** Method as claimed in one of the Claims 12 to 21, wherein the step to determine the damage to the wall comprises a step involving the measurement of a static internal pressure present in the interior channel, particularly in relation to an ambient pressure acting on the wall from the outside, and/or a step involving the measurement of a temperature of the wall, particularly on a side of the wall facing away from the interior channel, particularly in such a way that the step to determine the strain value ($X_{\varepsilon 1}$) comprises a step to measure the strain of at least one of the wall segments.

**22.** Method as claimed in one of the previous claims, further comprising a step involving the change of a pressure difference ($p_{rel}$) existing between a static internal pressure present in the interior channel and an ambient pressure acting on the exterior of the wall for the elastic deformation at least of parts of the wall, particularly at least of the first segment of the wall and at least the second segment of the wall.

**23.** Method as claimed in the previous claim,

- wherein the step involving the change of the pressure difference comprises a step to increase the static internal pressure to a pressure value that is greater than the ambient pressure, particularly by more than 0.5 bar; and/or
- wherein the step involving the change of the pressure difference comprises a step whereby fluid is allowed to flow into the interior channel of the pressure device; and/or
- wherein the step involving the change of the pressure difference comprises a step whereby fluid is allowed to flow through the interior channel of the pressure device.

**Revendications**

1. Système de mesure destiné à la détermination de valeurs de mesure représentant au moins une grandeur de mesure, notamment fluidodynamique et/ou thermodynamique - notamment un débit volumique, un débit massique, une densité, une viscosité, une pression ou une température - d'un fluide, notamment un gaz, un liquide ou une dispersion fluide, lequel système de mesure comprend :

- un appareil sous pression pouvant être monté avec une conduite, notamment de manière amovible, et présentant un canal intérieur entouré d'une paroi, notamment métallique, à savoir un appareil destiné au guidage et/ou à la retenue du fluide, notamment agissant nominalement avec une pression de plus de 0,5 bar sur la paroi, dans le dit canal intérieur ;
- un premier capteur d'allongement fixé sur un premier segment de paroi, notamment métallique, formé notamment au moyen d'une jauge de contrainte, lequel capteur est destiné à générer un premier signal d'allongement dépendant d'un allongement variable dans le temps du premier segment de paroi, notamment avec une tension électrique dépendant du même allongement et/ou un courant électrique dépendant du même allongement,
- au moins un deuxième capteur d'allongement, qui est fixé sur un deuxième segment de paroi, notamment métallique, lequel deuxième segment de paroi est espacé du premier segment de paroi, s'use plus rapidement et/ou est plus usé que le premier segment de paroi, et qui est notamment formé au moyen d'une jauge de contrainte et/ou est de construction identique au premier capteur d'allongement, lequel deuxième capteur est destiné à générer un deuxième signal d'allongement qui dépend d'un allongement variable dans le temps du deuxième segment de paroi, notamment avec une tension électrique qui dépend du même allongement et/ou un courant électrique qui dépend du même allongement ;
- ainsi qu'une électronique de transmetteur couplée électriquement à la fois au premier capteur d'allongement et au deuxième capteur d'allongement, et laquelle électronique est conçue pour

-- recevoir à la fois le premier signal d'allongement et le deuxième signal d'allongement,
-- ainsi que, en utilisant à la fois le premier et le deuxième signal d'allongement, pour déterminer un endommagement de la paroi, notamment un endommagement qui réduit la résistance à la compression de l'appareil sous pression et/ou qui contribue à codéterminer une durée de vie résiduelle de l'appareil sous pression et/ou qui résulte d'une déformation plastique de la paroi et/ou qui résulte de l'usure de la paroi, notamment pour déterminer une valeur d'endommagement (Err$_{\Delta\varepsilon}$) qui représente une valeur d'indice pour un indice d'endommagement quantifiant l'endommagement de la paroi, à savoir, en utilisant à la fois le premier signal d'allongement et le deuxième signal d'allongement, pour générer une valeur d'écart d'allongement représentant une différence entre l'allongement du premier segment de paroi et l'allongement du deuxième segment de paroi, ainsi que pour déterminer l'endommagement de la paroi en utilisant la valeur d'écart d'allongement (X$_{\Delta\varepsilon}$) ;

- l'appareil sous pression comprenant un transducteur du type à vibration avec un agencement de tubes formé au moyen d'au moins un tube, notamment au moins partiellement courbé, et destiné au guidage du fluide, lequel transducteur est conçu pour délivrer au moins un signal de mesure, notamment électrique, correspondant à la dite grandeur de mesure,
- le canal intérieur de l'appareil sous pression étant formé au moyen de l'agencement de tubes,
- et l'agencement de tubes étant conçu pour être traversé par le fluide de sorte que le premier segment de paroi est espacé du deuxième segment de paroi par rapport à une direction d'écoulement du fluide,
- le canal intérieur de l'appareil sous pression étant formé au moyen de l'agencement de tubes et s'étendant d'une extrémité d'entrée (100+) à une extrémité de sortie (100#),
- l'agencement de tubes comprenant à la fois le premier segment de paroi et le deuxième segment de paroi,
- et le segment de paroi (WS1) étant à même distance de l'extrémité d'entrée (100+) que le deuxième segment de paroi (WS2) l'est de l'extrémité de sortie (100#).

**2.** Système de mesure selon la revendication précédente,

- pour lequel l'électronique de transmetteur est conçue pour générer la valeur d'écart d'allongement ($X_{\Delta\varepsilon}$) à la fois pour un paramètre de signal caractérisant le premier signal d'allongement et pour un paramètre de signal caractérisant le deuxième signal d'allongement, notamment une valeur instantanée, un paramètre de position et/ou un paramètre de dispersion, pour déterminer de façon récurrente à chaque fois une valeur mesurée de paramètre quantifiant le même paramètre de signal, notamment de telle sorte que l'électronique de transmetteur forme une différence et/ou un quotient au moyen d'au moins une valeur mesurée de paramètre dérivée du premier signal d'allongement et d'au moins une valeur mesurée de paramètre dérivée du deuxième signal d'allongement ; et/ou
- pour lequel l'électronique de transmetteur est conçue pour générer, sur la base à la fois du premier et du deuxième signal d'allongement - notamment en utilisant une valeur d'écart d'allongement ($X_{\Delta\varepsilon}$) déterminée sur la base du premier signal d'allongement et du deuxième signal d'allongement et représentant un écart entre l'allongement du premier segment de paroi et du deuxième segment de paroi - un message d'avertissement signalant l'endommagement en question, notamment perceptible visuellement et/ou acoustiquement, notamment pour générer le message d'avertissement si une valeur d'endommagement ($Err_{\Delta\varepsilon}$) déterminée sur la base du premier et du deuxième signal d'allongement dépasse une valeur seuil ($TH_{\Delta\varepsilon}$) prédéfinie représentant un endommagement critique de la paroi déterminé au préalable pour l'appareil sous pression ; et/ou
- pour lequel l'électronique de transmetteur est conçue - sur la base du premier et du deuxième signal d'allongement, notamment en utilisant une valeur d'écart d'allongement ($X_{\Delta\varepsilon}$) qui est déterminée sur la base du premier signal d'allongement et du deuxième signal d'allongement et qui représente un écart entre l'allongement du premier segment de paroi et du deuxième segment de paroi - pour déterminer une valeur d'endommagement ($Err_{\Delta\varepsilon}$), à savoir une valeur d'indice pour un indice d'endommagement quantifiant un endommagement momentané de la paroi, laquelle valeur d'endommagement ($Err_{\Delta\varepsilon}$) représente un écart, notamment relatif ou absolu, de la valeur d'allongement ($X_{\Delta\varepsilon}$) par rapport à une valeur de référence ($Ref_{\Delta\varepsilon}$) déterminée à cette fin, notamment au préalable sur un appareil sous pression dont la paroi est intacte ou au préalable sur un autre appareil sous pression de conception identique, notamment de telle sorte que la valeur d'endommagement ($Err_{\Delta\varepsilon}$) remplisse une condition

$$Err_{\Delta\varepsilon} = 1 - \frac{X_{\Delta\varepsilon}}{Ref_{\Delta\varepsilon}}$$

ou une condition $Err_{\Delta\varepsilon} = Ref_{\Delta\varepsilon} - X_{\Delta\varepsilon}$.

**3.** Système de mesure selon l'une des revendications précédentes, pour lequel le premier segment de paroi est disposé en amont du deuxième segment de paroi par rapport au sens d'écoulement du fluide.

**4.** Système de mesure selon l'une des revendications précédentes, pour lequel l'agencement de tubes du transducteur comprend au moins deux tubes, notamment formant des chemins d'écoulement de l'agencement de tubes parallèles en terme d'écoulement, et/ou quatre tubes et/ou des tubes de conception identique.

**5.** Système de mesure selon la revendication précédente,

- pour lequel le premier capteur d'allongement est fixé sur l'un des tubes ; et/ou
- pour lequel le deuxième capteur d'allongement est fixé sur l'un des tubes.

**6.** Système de mesure selon la revendication précédente, pour lequel à la fois le premier capteur d'allongement et le deuxième capteur d'allongement sont fixés sur l'un des tubes, de telle sorte que le deuxième capteur d'allongement n'est pas fixé sur le même tube que le premier capteur d'allongement.

**7.** Système de mesure selon l'une des revendications précédentes,

- pour lequel l'électronique de transmetteur est couplée électriquement avec le transducteur,
- et pour lequel l'électronique de transmetteur est conçue pour

-- recevoir l'au moins un signal de mesure, ainsi qu'en utilisant le dit signal de mesure, pour déterminer une valeur mesurée, qui représente une grandeur de mesure physique, notamment fluidodynamique et/ou thermodynamique, notamment un débit volumique, un débit massique, une densité, une viscosité, une pression ou une température du fluide, et/ou
-- à délivrer un signal de commande électrique, notamment commandant le transducteur, notamment induisant dans le transducteur un effet de mesure correspondant à l'au moins une grandeur de mesure.

8. Système de mesure selon l'une des revendications précédentes,

   - pour lequel l'appareil sous pression est un débitmètre massique Coriolis,
   - et pour lequel le transducteur comprend au moins deux capteurs de vibrations espacés l'une de l'autre, destinés à générer deux signaux de vibration (s1, s2) avec un angle de phase dépendant du débit massique.

9. Système de mesure selon l'une des revendications précédentes, pour lequel est prévue, côté entrée, notamment dans la zone de l'extrémité d'entrée (100+) de l'appareil sous pression, une première bride de raccordement (13) pour le raccordement à un segment d'une conduite acheminant le fluide et, côté sortie, notamment dans la zone de l'extrémité de sortie (100#) de l'appareil sous pression, une deuxième bride de raccordement (14) pour le raccordement à un segment d'une conduite évacuant de nouveau le fluide.

10. Système de mesure selon l'une des revendications précédentes, pour lequel l'appareil sous pression comporte un boîtier de transducteur (100) couplé mécaniquement avec l'agencement de tubes aussi bien dans la zone de l'extrémité d'entrée (100+) que dans la zone de l'extrémité de sortie (100#).

11. Système de mesure selon la revendication 9 et 10, pour lequel les brides de raccordement (13, 14) sont intégrées à leurs extrémités dans le boîtier de transducteur (100).

12. Procédé destiné à la surveillance et/ou à la vérification d'un système de mesure selon l'une des revendications précédentes présentant un canal intérieur entouré d'une paroi (W), notamment métallique, lequel système de mesure peut être monté avec une conduite, notamment de manière amovible, lequel procédé comprend les étapes suivantes :

   - Mesure à la fois d'un allongement, $\varepsilon_1$, du premier segment de paroi (WS1), qui varie notamment dans le temps et/ou dépend d'une pression interne statique régnant dans le canal intérieur, et d'un allongement, $\varepsilon_2$, au moins du deuxième segment de paroi (WS2), qui varie notamment dans le temps et/ou dépend d'une pression interne statique régnant dans le canal intérieur, en vue de déterminer une valeur d'écart d'allongement ($X_{\Delta\varepsilon}$) représentant une différence entre l'allongement du premier segment de paroi et l'allongement du deuxième segment de paroi ; ainsi que
   - Utilisation de la valeur d'écart d'allongement ($X_{\Delta\varepsilon}$) pour déterminer un endommagement de la paroi, notamment à la suite d'une déformation plastique de la paroi et/ou à la suite d'une usure de la paroi.

13. Procédé selon la revendication précédente, comprenant en outre :

   - Génération d'un premier signal d'allongement qui dépend d'un allongement variable dans le temps du premier segment de paroi, notamment avec une tension électrique dépendant du même allongement et/ou un courant électrique dépendant du même allongement, ainsi que
   - Génération d'un deuxième signal d'allongement qui dépend d'un allongement variable dans le temps du deuxième segment de paroi, notamment avec une tension électrique dépendant du même allongement et/ou un courant électrique dépendant du même allongement.

14. Procédé selon la revendication précédente, comprenant en outre :

   - Utilisation de la jauge de contrainte fixée sur le premier segment de paroi pour la génération du premier signal d'allongement ainsi que de la jauge de contrainte fixée sur le deuxième segment de paroi pour la génération du deuxième signal d'allongement ; et/ou
   - Utilisation à la fois du premier signal d'allongement et du deuxième signal d'allongement pour la détermination de la valeur d'écart d'allongement ($X_{\Delta\varepsilon}$).

15. Procédé selon l'une des revendications précédentes, pour lequel l'étape de la détermination de l'endommagement de la paroi comprend une étape de l'utilisation de la valeur d'écart d'allongement ($X_{\Delta\varepsilon}$) pour la détermination d'un écart de la différence d'allongement par rapport à une différence d'allongement initiale déterminée au préalable, notamment pour l'appareil sous pression présentant une paroi intacte.

16. Procédé selon la revendication précédente, pour lequel l'étape de la détermination de la valeur d'écart d'allongement ($X_{\Delta\varepsilon}$) comprend une étape de l'utilisation à la fois du premier signal d'allongement et du deuxième signal d'allongement, notamment de telle sorte qu'au moins un paramètre de signal est dérivé à la fois du premier signal d'allongement et du deuxième signal d'allongement.

17. Procédé selon la revendication précédente, pour lequel, pour déterminer la valeur de l'écart d'allongement ($X_{\Delta\varepsilon}$) à la fois à partir du premier signal d'allongement et du deuxième signal d'allongement, on détermine au moins une valeur mesurée de paramètre pour un paramètre de signal caractérisant le signal d'allongement respectif, notamment une valeur instantanée de chacun des deux signaux d'allongement et/ou un paramètre de position de chacun des deux signaux d'allongement, ainsi qu'une différence entre le paramètre de signal dérivé du premier signal d'allongement et le paramètre de signal dérivé du deuxième signal d'allongement et/ou un quotient entre le paramètre de signal dérivé du premier signal d'allongement et le paramètre de signal dérivé du deuxième signal d'allongement.

18. Procédé selon l'une des revendications 12 à 17, comprenant en outre :

    - une étape consistant à générer un message d'avertissement qui signale, notamment de manière perceptible visuellement et/ou acoustiquement, un endommagement critique de la paroi correspondant notamment à un endommagement maximal admissible de la paroi défini au préalable pour l'appareil sous pression et/ou nécessitant une inspection de l'appareil sous pression, notamment de telle sorte qu'une valeur d'endommagement ($Err_{\Delta\varepsilon}$) - déterminée en utilisant la valeur de l'écart d'allongement ($X_{\Delta\varepsilon}$) - est comparée à une valeur seuil ($TH_{\Delta\varepsilon}$) prédéterminée à cet effet et représentant un endommagement critique de la paroi défini au préalable pour l'appareil sous pression ; et/ou
    - une étape consistant à permettre au fluide de s'écouler dans le canal intérieur de l'appareil sous pression, notamment pour augmenter une pression statique interne régnant dans le canal intérieur à une valeur de pression plus élevée comparée à la pression environnante ; et/ou
    - une étape consistant à laisser le fluide s'écouler hors du canal intérieur de l'appareil sous pression ; et/ou
    - une étape consistant à déterminer une valeur d'allongement ($X_{\varepsilon 1}$) représentant un allongement, notamment local ou moyen, de la paroi, notamment un allongement d'un seul des segments de paroi, l'étape de détermination de l'endommagement de la paroi comprenant une étape d'utilisation de la valeur d'allongement ($X_{\varepsilon 1}$).

19. Procédé selon l'une des revendications 12 à 18, pour lequel l'étape de la détermination de l'endommagement de la paroi comprend une étape de l'utilisation de la valeur de l'écart d'allongement ($X_{\Delta\varepsilon}$) en vue de déterminer une valeur d'endommagement ($Err_{\Delta\varepsilon}$), à savoir une valeur d'indice quantifiant un endommagement de la paroi - notamment représentant un écart de la différence d'allongement par rapport à une valeur de référence ($Ref_{\Delta\varepsilon}$) déterminée au préalable à cet effet.

20. Procédé selon la revendication précédente,

    - pour lequel l'étape de la détermination de l'endommagement de la paroi comprend une étape de l'utilisation de la valeur d'endommagement ($Err_{\Delta\varepsilon}$), notamment de telle sorte que la valeur d'endommagement ($Err_{\Delta\varepsilon}$) est comparée avec une valeur seuil ($TH_{\Delta\varepsilon}$) prédéfinie à cette fin ; et/ou
    - pour lequel la valeur d'endommagement ($Err_{\Delta\varepsilon}$) représente un écart de la différence d'allongement, notamment relatif ou absolu, par rapport à une valeur de référence ($Ref_{\Delta\varepsilon}$) déterminée à cette fin, notamment au préalable sur l'appareil sous pression présentant une paroi intacte ou au préalable sur un autre appareil sous pression de conception identique, notamment de telle sorte que la valeur d'endommagement ($Err_{\Delta\varepsilon}$) remplisse

    une condition :

    $$Err_{\Delta\varepsilon} = 1 - \frac{X_{\Delta\varepsilon}}{Ref_{\Delta\varepsilon}}$$

    ou
    une condition :

    $$Err_{\Delta\varepsilon} = Ref_{\Delta\varepsilon} - X_{\Delta\varepsilon} \; .$$

21. Procédé selon l'une des revendications 12 à 21, pour lequel l'étape de la détermination de l'endommagement de la paroi comprend une étape de la mesure d'une pression interne statique régnant à l'intérieur du canal intérieur, notamment par rapport à une pression environnante agissant sur la paroi, et/ou une étape de la mesure d'une température de la paroi, notamment sur un côté de la paroi éloigné du canal intérieur, notamment de telle sorte que l'étape de la détermination de la valeur d'allongement ($X_{\varepsilon 1}$) comprend une étape de la mesure de l'allongement d'au moins l'un des segments de paroi.

22. Procédé selon l'une des revendications précédentes, comprenant en outre une étape de la modification d'une différence de pression ($p_{rel}$) existant entre la pression interne statique régnant à l'intérieur du canal intérieur et une pression environnante agissant de l'extérieur sur la paroi, en vue de la déformation élastique au moins de zones partielles de la paroi, notamment au moins du premier segment de la paroi et au moins du deuxième segment de la paroi.

23. Procédé selon la revendication précédente,

- pour lequel l'étape de la modification de la différence de pression comprend une étape de l'augmentation de la pression interne statique à une valeur de pression, qui est supérieure à la pression environnante, notamment de plus de 0,5 bar ; et/ou
- pour lequel l'étape de la modification de la différence de pression comprend une étape consistant à permettre au fluide de s'écouler dans le canal intérieur de l'appareil sous pression ; et/ou
- pour lequel l'étape de la modification de la différence de pression comprend une étape consistant à laisser le fluide s'écouler à travers le canal intérieur de l'appareil sous pression.

**Fig. 1**

EP 3 008 442 B1

*Fig. 2*

**Fig. 3**

**Fig. 4a**

**Fig. 4b**

**Fig. 5**

**Fig. 6**

EP 3 008 442 B1

**Fig. 7**

EP 3 008 442 B1

*Fig. 8*

EP 3 008 442 B1

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 816807 A
- EP 919793 A
- EP 1001254 A
- US 20010029790 A
- US 20040261541 A
- US 20050039547 A
- US 20060266129 A
- US 20070095153 A
- US 20070234824 A
- US 20080141789 A
- US 20110113896 A
- US 20110161018 A
- US 20110219872 A
- US 20120123705 A
- US 4680974 A
- WO 2005050145 A
- WO 2009134268 A
- WO 9015310 A
- WO 9516897 A
- WO 9605484 A
- WO 9740348 A

- WO 9807009 A
- WO 9939164 A
- US 5796011 A
- US 7284449 B
- US 7017424 B
- US 6910366 B
- US 6840109 B
- US 5576500 A
- US 6651513 B
- US 20050072238 A
- US 20060225493 A
- US 20080072688 A
- US 20110265580 A
- WO 2006009548 A
- WO 2008042290 A
- WO 2007040468 A
- WO 2013060659 A
- EP 2012070924 W
- US 5602345 A
- WO 9608697 A